# EUROPEAN PATENT APPLICATION

(11) **EP 4 618 623 A1**
(43) Date of publication of application: **17.09.2025**
(21) Application number: 23887574.4
(22) Date of filing: 21.08.2023
(51) Int. Cl.: H04W 36/00

(54) **INFORMATION TRANSMISSION METHOD AND APPARATUS, TERMINAL, AND NETWORK DEVICE**

(30) Priority: 11.11.2022 CN 202211414728
(71) Applicant: Datang Mobile Communications Equipment Co., Ltd., Beijing 100085 (CN)
(72) Inventor: ZHAO, Yali, Beijing 100085 (CN); LIANG, Jing, Beijing 100085 (CN); ZENG, Erlin, Beijing 100085 (CN)
(74) Representative: Studio Torta S.p.A.
(86) International application number: PCT/CN2023/113951
(87) International publication number: WO 2024/098879

(57) **Abstract**

This application provides a method and an apparatus for information transmission, a terminal, and a network device. The method is performed by a first terminal and includes: receiving, by the first terminal, a first message sent by a network device, wherein the first message comprises a mapping relationship between first sidelink interface identification information and first Uu interface identification information.

## Description

### CROSS-REFERENCE TO RELATED APPLICATIONS

This application claims priority to Chinese Patent Application No. 202211414728.X, filed with the China National Intellectual Property Administration on November 11, 2022, entitled "Information Transmission Method, Apparatus, Terminal, and Network Device," the entire content of which is incorporated herein by reference.

### TECHNICAL FIELD

The present disclosure relates to the field of communication technologies, and in particular, to an information transmission method, apparatus, terminal, and network device.

### BACKGROUND

In the current network, there are mainly two types of transmission paths between two terminals: data transmission through a cellular network (User to Network interface Universal, Uu link), and data transmission through a sidelink interface (also referred to as a Proximity Communication (PCS) interface). At present, the transmission path is selected for the terminal by a higher layer (core network), which either solely utilizes cellular network communication or solely utilizes sidelink through the sidelink interface. The mechanism in the related art cannot achieve flexible switching between the two transmission paths while ensuring service continuity.

### SUMMARY

Embodiments of the present disclosure provide an information transmission method, apparatus, terminal, and network device, so as to solve the problem in the related art in which the existing mechanism cannot flexibly switch between two types of transmission paths while ensuring service continuity.

To address the above-mentioned technical problem, an embodiment of the present disclosure provides an information transmission method, performed by a first terminal, comprising:
receiving a first message sent by a network device, wherein the first message includes a mapping relationship between first sidelink interface identification information and first Uu interface identification information.

Optionally, after receiving the first message sent by the network device, the method further comprises:
sending a second message to a second terminal via a sidelink interface, wherein the second message includes the mapping relationship between the first sidelink interface identification information and the first Uu interface identification information, wherein the second terminal is a communication peer of the first terminal via the sidelink interface, and the number of the second terminal is greater than or equal to 1.

Optionally, the first sidelink interface identification information comprises one of the following:
a destination Layer 2 Identity of the sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identifier of the sidelink interface of the first terminal;
a combination of a source Layer 2 Identity, a destination Layer 2 Identity, a cast type, and a logical channel identifier of the sidelink interface of the first terminal;
wherein the cast type comprises at least one of: unicast, multicast, and broadcast.

Optionally, the first Uu interface identification information comprises at least one of the following:
a radio network temporary identifier (RNTI) used by the first terminal on the Uu interface;
an RNTI used by the second terminal on the Uu interface;
identification information of a network device and/or cell serving the first terminal.

The identification information of the network device and/or the cell serving the second terminal;
for broadcast or multicast, a group radio network temporary identifier (G-RNTI) used by the second terminal on the Uu interface;
for broadcast or multicast, the identification information of the network device and/or the cell receiving the G-RNTI executed by the second terminal.

Optionally, the method further comprises:
sending a third message to a network device, wherein the third message carries identification information of the second terminal.

Optionally, the identification information of the second terminal comprises at least one of the following:
a destination Layer 2 Identity of a sidelink interface corresponding to the second terminal;
a combination of the destination Layer 2 Identity of the sidelink interface corresponding to the second terminal and a cast type;
identification information of a second Uu interface corresponding to the second terminal.

Optionally, the third message further carries identification information of the first terminal.

Optionally, the identification information of the first terminal is a source Layer 2 Identity of a sidelink interface corresponding to the first terminal.

Optionally, the method further comprises:
receiving a fourth message sent by the second terminal, wherein the fourth message includes identification information of a second Uu interface corresponding to the second terminal.

Optionally, the identification information of the second Uu interface comprises at least one of the following:
an RNTI used by the second terminal on the Uu interface;
identification information of a network device and/or cell serving the second terminal;
for broadcast/multicast, a G-RNTI used by the second terminal on the Uu interface;
for broadcast/multicast, identification information of a network device and/or cell receiving the G-RNTI executed by the second terminal.

Optionally, sending the third message to the network device comprises:
sending the third message to the network device in response to a first condition being satisfied.

Optionally, the first condition comprises at least one of the following:
the first terminal receives the fourth message from the second terminal;
the channel quality of the sidelink interface between the first terminal and the second terminal is less than or equal to a first threshold;
the channel quality of the sidelink interface between the first terminal and the second terminal is greater than or equal to a second threshold;
the channel quality of the Uu interface between the first terminal and the network device is less than or equal to a third threshold;
the channel quality of the Uu interface between the second terminal and the network device is less than or equal to a fourth threshold;
the channel quality of the Uu interface between the first terminal and the network device is greater than or equal to a fifth threshold;
the channel quality of the Uu interface between the second terminal and the network device is greater than or equal to a sixth threshold;
a cast type of the first terminal changes;
a cast type of one or more logical channels of the first terminal changes.

Optionally, the method further comprises:
receiving a fifth message sent by a network device, wherein the fifth message carries transmission path indication information.

Optionally, the receiving the fifth message sent by the network device comprises:
receiving the fifth message sent by the network device through first signaling;
wherein the first signaling comprises one of the following: Radio Resource Control (RRC) signaling, Medium Access Control Control Element (MAC CE), or physical layer signaling.

Optionally, the method further comprises:
sending a sixth message to the second terminal, wherein the sixth message carries the transmission path indication information.

Optionally, the transmission path indication information comprises one of the following:
a transmission path type;
a transmission path type corresponding to a first bearer or a first logical channel.
the transmission path type corresponding to a specific object;
a transmission path type corresponding to a first bearer or a first logical channel of a specific object;
G-RNTI indication information used by the first terminal and/or the second terminal for multicast scheduling over the Uu interface;
G-RNTI indication information used by the first terminal and/or the second terminal for broadcast scheduling over the Uu interface;
wherein the transmission path type comprises a Uu link or a sidelink link;
the specific object comprises at least one of the following:
   a destination Layer 2 Identity;
   a combination of a source Layer 2 Identity and a destination Layer 2 Identity;
   a combination of a source Layer 2 Identity, a destination Layer 2 Identity, and a cast type.

The present disclosure further provides an information transmission method performed by a network device, comprising:
sending a first message to a first terminal and/or a second terminal, wherein the first message comprises a mapping relationship between a first sidelink interface identifier and a first Uu interface identifier;
wherein the second terminal is a sidelink interface peer of the first terminal.

Optionally, the first sidelink interface identifier comprises one of the following:
a destination Layer 2 Identity of the sidelink interface of the first terminal;
a combination of the destination Layer 2 Identity of the sidelink interface of the first terminal and a cast type;
a combination of the source Layer 2 Identity and the destination Layer 2 Identity of the sidelink interface of the first terminal;
a combination of the source Layer 2 Identity, the destination Layer 2 Identity, and the cast type of the sidelink interface of the first terminal;
a combination of the source Layer 2 Identity, the destination Layer 2 Identity, and a logical channel identifier of the sidelink interface of the first terminal;
a combination of the source Layer 2 Identity, the destination Layer 2 Identity, the cast type, and a logical channel identifier of the sidelink interface of the first terminal;
wherein the cast type comprises at least one of the following: unicast, multicast, and broadcast.

Optionally, the first Uu interface identifier comprises at least one of the following:
a Radio Network Temporary Identifier (RNTI) used by the first terminal on the Uu interface;
an RNTI used by the second terminal on the Uu interface;
identifier information of a network device and/or a cell serving the first terminal;
identifier information of a network device and/or a cell serving the second terminal;
a group RNTI (G-RNTI) used by the second terminal for broadcast or multicast over the Uu interface;
identifier information of a network device and/or a cell receiving the G-RNTI executed by the second terminal for broadcast or multicast over the Uu interface.

Optionally, the method further comprises:
receiving a third message sent by the first terminal and/or the second terminal, wherein the third message carries identification information of the second terminal.

Optionally, the identification information of the second terminal comprises at least one of the following:
The destination Layer 2 Identity of the sidelink interface corresponding to the second terminal;
A combination of the destination Layer 2 Identity of the sidelink interface corresponding to the second terminal and the cast type;
The identification information of the second Uu interface corresponding to the second terminal;
Optionally, the third message further carries identification information of the first terminal;
Optionally, the identification information of the first terminal is a source Layer 2 Identity of the sidelink interface corresponding to the first terminal;
Optionally, after sending the first message to the first terminal and/or the second terminal, the method further comprises:
   sending, by the network device, a fifth message to the first terminal and/or the second terminal, wherein the fifth message carries transmission path indication information;
   Optionally, the sending of the fifth message to the first terminal and/or the second terminal comprises:
      sending, by the network device, the fifth message to the first terminal and/or the second terminal via first signaling;
      wherein the first signaling comprises one of the following: Radio Resource Control (RRC) signaling, Medium Access Control Control Element (MAC CE), or physical layer signaling;
      Optionally, the transmission path indication information comprises one of the following:
         a transmission path type;
         a transmission path type corresponding to a first bearer or a first logical channel;
         a transmission path type corresponding to a specific object;
         a transmission path type corresponding to a first bearer or a first logical channel of a specific object;
         G-RNTI indication information used for multicast scheduling over the Uu interface by the first terminal and/or the second terminal;
         G-RNTI indication information used for broadcast scheduling over the Uu interface by the first terminal and/or the second terminal;
         wherein the transmission path type comprises: a Uu link or a sidelink link;
         wherein the specific object comprises at least one of the following:
            a destination Layer 2 Identity;
            A combination of a source Layer 2 Identity and a destination Layer 2 Identity.

A combination of a source Layer 2 Identity, a destination Layer 2 Identity, and a cast type.

According to the embodiments of the present disclosure, an information transmission method is further provided, performed by a second terminal, comprising:
receiving, by the second terminal, a first message sent by a network device or a first terminal, wherein the first message comprises a mapping relationship between first sidelink interface identification information and first Uu interface identification information;
wherein the second terminal serves as a sidelink interface peer of the first terminal.

Optionally, the first sidelink interface identification information comprises one of the following:
a destination Layer 2 Identity of a sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identifier of the sidelink interface of the first terminal;
a combination of a source Layer 2 Identity, a destination Layer 2 Identity, a cast type, and a logical channel identifier of the sidelink interface of the first terminal;
wherein the cast type comprises at least one of the following: unicast, multicast, and broadcast.

Optionally, the first Uu interface identification information comprises at least one of the following:
a radio network temporary identifier (RNTI) used by the first terminal on a Uu interface;
an RNTI used by the second terminal on a Uu interface;
identification information of a network device and/or a cell serving the first terminal;
identification information of a network device and/or a cell serving the second terminal;
for broadcast or multicast, a group radio network temporary identifier (G-RNTI) used by the second terminal on a Uu interface;
for broadcast or multicast, identification information of a network device and/or a cell performing G-RNTI reception for the second terminal.

Optionally, the method further comprises:
sending, by the second terminal, a third message to a network device, wherein the third message carries identification information of the second terminal.

Optionally, the identification information of the second terminal comprises at least one of the following:
a destination Layer 2 Identity of a sidelink interface corresponding to the second terminal;
a combination of the destination Layer 2 Identity of the sidelink interface corresponding to the second terminal and a cast type;
identification information of a second Uu interface corresponding to the second terminal.

Optionally, the method further comprises:
sending, by the second terminal, a fourth message to the first terminal, wherein the fourth message comprises identification information of the second Uu interface corresponding to the second terminal.

Optionally, the identification information of the second Uu interface comprises at least one of the following:
an RNTI used by the second terminal on a Uu interface;
identification information of a network device and/or a cell serving the second terminal;
for broadcast/multicast, a G-RNTI used by the second terminal on a Uu interface;
for broadcast/multicast, identification information of a network device and/or a cell performing G-RNTI reception for the second terminal.

Optionally, the sending of the fourth message to the first terminal comprises:
sending the fourth message to the first terminal when a second condition is satisfied;
wherein the second condition comprises at least one of the following:
   the first terminal and/or the second terminal establishes a radio resource control (RRC) connection with the network device;
   the second terminal discovers the first terminal through the sidelink interface;
   the second terminal establishes a PC5-S connection or a PC5-RRC connection with the first terminal through the sidelink interface.

Optionally, the method further comprises:
An information transmission method is further provided, performed by a second terminal, comprising: receiving, by the second terminal, a fifth message transmitted by a network device or the first terminal, wherein the fifth message includes transmission path indication information.

Optionally, the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel of a specific object;
G-RNTI indication information used by the first terminal and/or the second terminal for multicast scheduling over the Uu interface;
G-RNTI indication information used by the first terminal and/or the second terminal for broadcast scheduling over the Uu interface.

Wherein the transmission path type comprises: a Uu link or a sidelink link.

The specific object comprises at least one of the following:
a destination Layer 2 Identity;
a combination of a source Layer 2 Identity and a destination Layer 2 Identity;
a combination of a source Layer 2 Identity, a destination Layer 2 Identity, and a cast type.

An information transmission method is further provided under the embodiments of the present disclosure, performed by a first terminal, comprising a memory, a transceiver, and a processor:
the memory is configured to store a computer program; the transceiver is configured to transmit and receive data under the control of the processor; and the processor is configured to read the computer program from the memory and perform the following operations:
receiving, via the transceiver, a first message transmitted by a network device, wherein the first message includes a mapping relationship between first sidelink interface identification information and first Uu interface identification information.

Optionally, the processor, when reading the computer program from the memory, is further configured to perform the following operations:
transmitting, via the sidelink interface, a second message to a second terminal, wherein the second message includes the mapping relationship between the first sidelink interface identification information and the first Uu interface identification information, the second terminal serves as a sidelink interface peer of the first terminal, and the number of the second terminals is greater than or equal to 1.

Optionally, the first sidelink interface identification information comprises one of the following:
a destination Layer 2 Identity of the sidelink interface of the first terminal;
a combination of the destination Layer 2 Identity of the sidelink interface of the first terminal and a cast type;
a combination of the source Layer 2 Identity and the destination Layer 2 Identity of the sidelink interface of the first terminal;
a combination of the source Layer 2 Identity, the destination Layer 2 Identity, and the cast type of the sidelink interface of the first terminal;
a combination of the source Layer 2 Identity, the destination Layer 2 Identity, and a logical channel identifier of the sidelink interface of the first terminal;
a combination of the source Layer 2 Identity, the destination Layer 2 Identity, the cast type, and the logical channel identifier of the sidelink interface of the first terminal;
wherein the cast type comprises at least one of the following: unicast, multicast, and broadcast.

Optionally, the first Uu interface identification information comprises at least one of the following:
a radio network temporary identifier (RNTI) used by the first terminal on the Uu interface;
an RNTI used by the second terminal on the Uu interface;
identification information of a network device and/or a cell serving the first terminal;
identification information of a network device and/or a cell serving the second terminal;
for broadcast or multicast, a group radio network temporary identifier (G-RNTI) used by the second terminal on the Uu interface;
for broadcast or multicast, identification information of a network device and/or a cell performing G-RNTI reception for the second terminal.

Optionally, the processor, when reading the computer program from the memory, is further configured to perform the following operation:
transmitting a third message to a network device, wherein the third message carries identification information of the second terminal.

Optionally, the identification information of the second terminal comprises at least one of the following:
a destination Layer 2 Identity of a sidelink interface corresponding to the second terminal;
a combination of the destination Layer 2 Identity of the sidelink interface corresponding to the second terminal and a cast type;
identification information of a second Uu interface corresponding to the second terminal.

Optionally, the third message further carries identification information of the first terminal.

Optionally, the identification information of the first terminal is a source Layer 2 Identity of the sidelink interface corresponding to the first terminal.

Optionally, the processor is further configured to read the computer program from the memory and perform the following operation:
receiving a fourth message sent by the second terminal, wherein the fourth message comprises identification information of a second Uu interface corresponding to the second terminal.

Optionally, the identification information of the second Uu interface comprises at least one of the following:
an RNTI used by the second terminal on a Uu interface;
identification information of a network device and/or a cell serving the second terminal;
for broadcast/multicast, a G-RNTI used by the second terminal on a Uu interface;
for broadcast/multicast, identification information of a network device and/or a cell performing G-RNTI reception for the second terminal.

Optionally, the processor is further configured to read the computer program from the memory and perform the following operation:
sending a third message to a network device when a first condition is satisfied;
wherein the first condition comprises at least one of the following:
   the first terminal receives the fourth message from the second terminal;
   a channel quality of a sidelink interface between the first terminal and the second terminal is less than or equal to a first threshold;
   a channel quality of a sidelink interface between the first terminal and the second terminal is greater than or equal to a second threshold;
   a channel quality of a Uu interface between the first terminal and the network device is less than or equal to a third threshold;
   a channel quality of a Uu interface between the second terminal and the network device is less than or equal to a fourth threshold;
   a channel quality of a Uu interface between the first terminal and the network device is greater than or equal to a fifth threshold;
   a channel quality of a Uu interface between the second terminal and the network device is greater than or equal to a sixth threshold;
   a cast type of the first terminal changes;
   a cast type of one or more logical channels of the first terminal changes.

Optionally, the processor is further configured to read the computer program from the memory and perform the following operation:
receiving a fifth message sent by a network device, wherein the fifth message comprises transmission path indication information.

Optionally, the processor is configured to read the computer program from the memory and perform the following operation:
receiving the fifth message sent by the network device through a first signaling;
wherein the first signaling comprises one of the following: radio resource control (RRC) signaling, medium access control control element (MAC CE), or physical layer signaling.

Optionally, the processor is further configured to read the computer program from the memory and perform the following operation:
sending a sixth message to the second terminal, wherein the sixth message comprises the transmission path indication information.

Optionally, the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel associated with a specific object;
G-RNTI indication information for multicast scheduling on a Uu interface by the first terminal and/or the second terminal;
G-RNTI indication information for broadcast scheduling on a Uu interface by the first terminal and/or the second terminal;
wherein the transmission path type comprises: a Uu link or a sidelink link.

The specific object comprises at least one of the following:
a destination Layer 2 Identity;
a combination of a source Layer 2 Identity and a destination Layer 2 Identity;
a combination of a source Layer 2 Identity, a destination Layer 2 Identity, and a cast type.

Embodiments of the present disclosure further provide a network device, comprising a memory, a transceiver, and a processor:
the memory is configured to store a computer program; the transceiver is configured to transmit and receive data under the control of the processor; and the processor is configured to read the computer program from the memory and perform the following operation:
sending, via the transceiver, a first message to a first terminal and/or a second terminal, wherein the first message comprises a mapping relationship between first sidelink interface identification information and first Uu interface identification information;
wherein the second terminal serves as a sidelink interface peer of the first terminal.

Optionally, the first sidelink interface identification information comprises one of the following:
a destination Layer 2 Identity of a sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identifier of the sidelink interface of the first terminal;
a combination of a source Layer 2 Identity, a destination Layer 2 Identity, a cast type, and a logical channel identifier of the sidelink interface of the first terminal;
wherein the cast type comprises at least one of the following: unicast, multicast, and broadcast.

Optionally, the first Uu interface identification information comprises at least one of the following:
a radio network temporary identifier (RNTI) used by the first terminal on a Uu interface;
an RNTI used by the second terminal on a Uu interface;
identification information of a network device and/or a cell serving the first terminal;
identification information of a network device and/or a cell serving the second terminal;
for broadcast or multicast, a group radio network temporary identifier (G-RNTI) used by the second terminal on a Uu interface;
for broadcast or multicast, identification information of a network device and/or a cell performing G-RNTI reception for the second terminal.

Optionally, the processor is further configured to read the computer program from the memory and perform the following operation:
receiving, via the transceiver, a third message sent by the first terminal and/or the second terminal, wherein the third message comprises identification information of the second terminal.

Optionally, the identification information of the second terminal comprises at least one of the following:
destination Layer 2 Identity of a sidelink interface corresponding to the second terminal;
a combination of the destination Layer 2 Identity of the sidelink interface corresponding to the second terminal and a cast type;
identification information of a second Uu interface corresponding to the second terminal.

Optionally, the third message further comprises identification information of the first terminal.

Optionally, the identification information of the first terminal is a source Layer 2 Identity of a sidelink interface corresponding to the first terminal.

Optionally, the processor is further configured to read the computer program from the memory and perform the following operation:
sending, via the transceiver, a fifth message to the first terminal and/or the second terminal, wherein the fifth message comprises transmission path indication information.

Optionally, the processor is further configured to read the computer program from the memory and perform the following operation:
sending, via the transceiver, the fifth message to the first terminal and/or the second terminal via first signaling;
wherein the first signaling comprises one of the following: Radio Resource Control (RRC) signaling, Medium Access Control Control Element (MAC CE), and physical layer signaling.

Optionally, the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel of the specific object;
G-RNTI indication information for multicast scheduling on the Uu interface used by the first terminal and/or the second terminal;
G-RNTI indication information for broadcast scheduling on the Uu interface used by the first terminal and/or the second terminal;
wherein the transmission path type comprises: a Uu link or a sidelink link;
the specific object comprises at least one of the following:
   a destination Layer 2 Identity;
   a combination of a source Layer 2 Identity and a destination Layer 2 Identity;
   a combination of a source Layer 2 Identity, a destination Layer 2 Identity, and a cast type.

Embodiments of the present disclosure further provide a terminal, the terminal being a second terminal, comprising a memory, a transceiver, and a processor:
the memory is configured to store a computer program; the transceiver is configured to transmit and receive data under the control of the processor; and the processor is configured to read the computer program from the memory and perform the following operation:
receiving, via the transceiver, a first message sent by a network device or a first terminal, wherein the first message comprises a mapping relationship between first sidelink interface identification information and first Uu interface identification information;
wherein the second terminal serves as a sidelink interface peer of the first terminal.

Optionally, the first sidelink interface identification information comprises one of the following:
a destination Layer 2 Identity of a sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identifier of the sidelink interface of the first terminal;
a combination of a source Layer 2 Identity, a destination Layer 2 Identity, a cast type, and a logical channel identifier of the sidelink interface of the first terminal;
wherein the cast type comprises at least one of the following: unicast, multicast, and broadcast.

Optionally, the first Uu interface identification information comprises at least one of the following:
a radio network temporary identifier (RNTI) used by the first terminal on a Uu interface;
an RNTI used by the second terminal on a Uu interface;
identification information of a network device and/or a cell serving the first terminal;
identification information of a network device and/or a cell serving the second terminal.
for broadcast or multicast, a group radio network temporary identifier (G-RNTI) used by the second terminal on a Uu interface;
for broadcast or multicast, identification information of a network device and/or a cell performing G-RNTI reception for the second terminal.

Optionally, the processor is further configured to read the computer program from the memory and perform the following operation:
sending, via the transceiver, a third message to the network device, wherein the third message comprises identification information of the second terminal.

Optionally, the identification information of the second terminal comprises at least one of the following:
a destination Layer 2 Identity of a sidelink interface corresponding to the second terminal;
a combination of the destination Layer 2 Identity of the sidelink interface corresponding to the second terminal and a cast type;
identification information of a second Uu interface corresponding to the second terminal.

Optionally, the processor is further configured to read the computer program from the memory and perform the following operation:
sending, via the transceiver, a fourth message to the first terminal, wherein the fourth message comprises identification information of the second Uu interface corresponding to the second terminal.

Optionally, the second Uu interface identification information comprises at least one of the following:
an RNTI used by the second terminal on a Uu interface;
identification information of a network device and/or a cell serving the second terminal;
for broadcast/multicast, a G-RNTI used by the second terminal on a Uu interface;
for broadcast/multicast, identification information of a network device and/or a cell performing G-RNTI reception for the second terminal.

Optionally, the processor, when configured to read the computer program from the memory, is further configured to perform the following operation:
transmitting, by the transceiver, a fourth message to the first terminal when a second condition is satisfied;
wherein the second condition comprises at least one of the following:
   an RRC connection having been established between the first terminal and/or the second terminal and the network device;
   the second terminal having discovered the first terminal via a sidelink interface;
   the second terminal having established a PC5-S connection or a PC5-RRC connection with the first terminal via the sidelink interface.

Optionally, the processor, when configured to read the computer program from the memory, is further configured to perform the following operation:
receiving, by the transceiver, a fifth message from the network device or the first terminal, wherein the fifth message comprises transmission path indication information.

Optionally, the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel of a specific object;
G-RNTI indication information for multicast scheduling on a Uu interface for the first terminal and/or the second terminal;
G-RNTI indication information for broadcast scheduling on a Uu interface for the first terminal and/or the second terminal.

The transmission path type comprises a Uu link or a sidelink link;
The specific object comprises at least one of the following:
a destination Layer 2 Identity;
a combination of a source Layer 2 Identity and a destination Layer 2 Identity;
a combination of a source Layer 2 Identity, a destination Layer 2 Identity, and a cast type.

Embodiments of the present disclosure further provide an information transmission apparatus, which is applied to a first terminal, comprising:
a first receiving unit, configured to receive a first message sent by a network device, wherein the first message comprises a mapping relationship between first sidelink interface identification information and first Uu interface identification information.

Optionally, after receiving the first message sent by the network device, the first receiving unit is further configured to comprise:
a second sending unit, configured to send a second message to a second terminal via a sidelink interface, wherein the second message comprises the mapping relationship between the first sidelink interface identification information and the first Uu interface identification information; wherein the second terminal serves as a sidelink interface peer of the first terminal, and a quantity of the second terminal is greater than or equal to 1.

Optionally, the first sidelink interface identification information comprises one of the following:
a destination Layer 2 Identity of the sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identifier of the sidelink interface of the first terminal;
a combination of a source Layer 2 Identity, a destination Layer 2 Identity, a cast type, and a logical channel identifier of the sidelink interface of the first terminal;
wherein the cast type comprises at least one of the following: unicast, multicast, and broadcast.

Optionally, the first Uu interface identification information comprises at least one of the following:
a radio network temporary identifier (RNTI) used by the first terminal on a Uu interface;
an RNTI used by the second terminal on a Uu interface;
identification information of a network device and/or a cell serving the first terminal;
identification information of a network device and/or a cell serving the second terminal;
for broadcast or multicast, a group radio network temporary identifier (G-RNTI) used by the second terminal on a Uu interface;
for broadcast or multicast, identification information of a network device and/or a cell performing G-RNTI reception for the second terminal.

Optionally, the apparatus further comprises:
a third sending unit, configured to send a third message to a network device, wherein the third message comprises identification information of the second terminal.

Optionally, the identification information of the second terminal comprises at least one of the following:
a destination Layer 2 Identity of a sidelink interface corresponding to the second terminal;
a combination of the destination Layer 2 Identity of a sidelink interface corresponding to the second terminal and a cast type;
identification information of a second Uu interface corresponding to the second terminal.

Optionally, the third message further comprises identification information of the first terminal.

Optionally, the identification information of the first terminal is a source Layer 2 Identity of a sidelink interface corresponding to the first terminal.

Optionally, the apparatus further comprises:
a third receiving unit, configured to receive a fourth message sent by a second terminal, wherein the fourth message comprises identification information of a second Uu interface corresponding to the second terminal.

Optionally, the identification information of the second Uu interface comprises at least one of the following:
an RNTI used by the second terminal on a Uu interface;
identification information of a network device and/or a cell serving the second terminal;
for broadcast/multicast, a G-RNTI used by the second terminal on a Uu interface;
for broadcast/multicast, identification information of a network device and/or a cell performing G-RNTI reception for the second terminal.

Optionally, the third sending unit is configured to:
send a third message to a network device when a first condition is satisfied;
wherein the first condition comprises at least one of the following:
   the first terminal receives the fourth message from the second terminal;
   a channel quality of the sidelink interface between the first terminal and the second terminal is less than or equal to a first threshold;
   a channel quality of the sidelink interface between the first terminal and the second terminal is greater than or equal to a second threshold;
   a channel quality of a Uu interface between the first terminal and the network device is less than or equal to a third threshold;
   a channel quality of a Uu interface between the second terminal and the network device is less than or equal to a fourth threshold;
   a channel quality of a Uu interface between the first terminal and the network device is greater than or equal to a fifth threshold;
   a channel quality of a Uu interface between the second terminal and the network device is greater than or equal to a sixth threshold;
   a cast type of the first terminal changes;
   a cast type of one or more logical channels of the first terminal changes.

Optionally, the apparatus further comprises:
a fourth receiving unit, configured to receive a fifth message sent by the network device, wherein the fifth message comprises transmission path indication information.

Optionally, the fourth receiving unit is configured to:
receive the fifth message sent by the network device via first signaling;
wherein the first signaling comprises one of the following: Radio Resource Control (RRC) signaling; Medium Access Control Control Element (MAC CE); physical layer signaling.

Optionally, the apparatus further comprises:
a fourth sending unit, configured to send a sixth message to the second terminal, wherein the sixth message comprises the transmission path indication information.

Optionally, the transmission path indication information comprises one of the following:
a transmission path type;
a transmission path type corresponding to a first bearer or a first logical channel;
a transmission path type corresponding to a specific object;
a transmission path type corresponding to the first bearer or the first logical channel of the specific object;
G-RNTI indication information used for multicast scheduling by the first terminal and/or the second terminal on a Uu interface;
G-RNTI indication information used for broadcast scheduling by the first terminal and/or the second terminal on a Uu interface;
wherein the transmission path type comprises: a Uu link or a sidelink link;
the specific object comprises at least one of the following:
   a destination Layer 2 Identity;
   a combination of a source Layer 2 Identity and a destination Layer 2 Identity;
   a combination of a source Layer 2 Identity, a destination Layer 2 Identity, and a cast type.

Under the embodiments of the present disclosure, an information transmission apparatus is further provided, which is applied to a network device, comprising:
a first sending unit, configured to send a first message to a first terminal and/or a second terminal, wherein the first message comprises a mapping relationship between first sidelink interface identification information and first Uu interface identification information;
wherein the second terminal serves as a sidelink interface peer of the first terminal.

Optionally, the first sidelink interface identification information comprises one of the following:
a destination Layer 2 Identity of a sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal.
a combination of a source Layer 2 Identity, a destination Layer 2 Identity, and a logical channel identifier of the sidelink interface of the first terminal;
a combination of a source Layer 2 Identity, a destination Layer 2 Identity, a cast type, and a logical channel identifier of the sidelink interface of the first terminal;
wherein the cast type comprises at least one of the following: unicast, multicast, and broadcast.

Optionally, the first Uu interface identification information comprises at least one of the following:
a radio network temporary identifier (RNTI) used by the first terminal on a Uu interface;
an RNTI used by the second terminal on a Uu interface;
identification information of a network device and/or a cell serving the first terminal;
identification information of a network device and/or a cell serving the second terminal;
for broadcast or multicast, a group radio network temporary identifier (G-RNTI) used by the second terminal on a Uu interface;
for broadcast or multicast, identification information of a network device and/or a cell performing G-RNTI reception for the second terminal.

Optionally, the apparatus further comprises:
a fifth receiving unit, configured to receive a third message sent by the first terminal and/or the second terminal, wherein the third message carries identification information of the second terminal.

Optionally, the identification information of the second terminal comprises at least one of the following:
a destination Layer 2 Identity of a sidelink interface corresponding to the second terminal;
a combination of the destination Layer 2 Identity of the sidelink interface corresponding to the second terminal and a cast type;
identification information of a second Uu interface corresponding to the second terminal.

Optionally, the third message further carries identification information of the first terminal.

Optionally, the identification information of the first terminal is a source Layer 2 Identity of the sidelink interface corresponding to the first terminal.

Optionally, after the first sending unit sends the first message to the first terminal and/or the second terminal, the apparatus further comprises:
a fifth sending unit, configured to send a fifth message to the first terminal and/or the second terminal, wherein the fifth message carries transmission path indication information.

Optionally, the fifth sending unit is configured to:
send the fifth message to the first terminal and/or the second terminal via first signaling;
wherein the first signaling comprises one of the following: Radio Resource Control (RRC) signaling; Medium Access Control Control Element (MAC CE); or physical layer signaling.

Optionally, the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel of a specific object;
G-RNTI indication information used by the first terminal and/or the second terminal for multicast scheduling on a Uu interface;
G-RNTI indication information used by the first terminal and/or the second terminal for broadcast scheduling on a Uu interface;
wherein the transmission path type comprises a Uu link or a sidelink link;
the specific object comprises at least one of the following:
   a destination Layer 2 Identity;
   a combination of a source Layer 2 Identity and a destination Layer 2 Identity;
   a combination of a source Layer 2 Identity, a destination Layer 2 Identity, and a cast type.

According to embodiments of the present disclosure, an information transmission apparatus is further provided, applied to a second terminal, comprising:
a second receiving unit, configured to receive a first message sent by a network device or a first terminal, wherein the first message comprises a mapping relationship between first sidelink interface identification information and first Uu interface identification information;
wherein the second terminal serves as a sidelink interface peer of the first terminal.

Optionally, the first sidelink interface identification information comprises one of the following:
a destination Layer 2 Identity of the sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identifier of the sidelink interface of the first terminal.
a combination of a source Layer 2 Identity, a destination Layer 2 Identity, a cast type, and a logical channel identifier of the sidelink interface of the first terminal;
wherein the cast type comprises at least one of the following: unicast, multicast, and broadcast.

Optionally, the first Uu interface identification information comprises at least one of the following:
a radio network temporary identifier (RNTI) used by the first terminal on a Uu interface;
an RNTI used by the second terminal on a Uu interface;
identification information of a network device and/or a cell serving the first terminal;
identification information of a network device and/or a cell serving the second terminal;
for broadcast or multicast, a group radio network temporary identifier (G-RNTI) used by the second terminal on a Uu interface;
for broadcast or multicast, identification information of a network device and/or a cell performing G-RNTI reception for the second terminal.

Optionally, the apparatus further comprises:
a sixth sending unit, configured to send a third message to the network device, wherein the third message carries identification information of the second terminal.

Optionally, the identification information of the second terminal comprises at least one of the following:
a destination Layer 2 Identity of the sidelink interface corresponding to the second terminal;
a combination of the destination Layer 2 Identity of the sidelink interface corresponding to the second terminal and a cast type;
identification information of a second Uu interface corresponding to the second terminal.

Optionally, the apparatus further comprises:
a seventh sending unit, configured to send a fourth message to the first terminal, wherein the fourth message comprises identification information of the second Uu interface corresponding to the second terminal.

Optionally, the identification information of the second Uu interface comprises at least one of the following:
an RNTI used by the second terminal on a Uu interface;
identification information of a network device and/or a cell serving the second terminal;
for broadcast or multicast, a G-RNTI used by the second terminal on a Uu interface;
for broadcast or multicast, identification information of a network device and/or a cell performing G-RNTI reception for the second terminal.

Optionally, the seventh sending unit is configured to:
sending, when a second condition is satisfied, the fourth message to the first terminal;
wherein the second condition comprises at least one of the following:
   the first terminal and/or the second terminal establishes a Radio Resource Control (RRC) connection with the network device;
   the second terminal discovers the first terminal via a sidelink interface;
   the second terminal establishes a PC5-S connection or a PC5-RRC connection with the first terminal via the sidelink interface.

Optionally, the apparatus further comprises:
a sixth receiving unit, configured to receive a fifth message sent by the network device or the first terminal, wherein the fifth message carries transmission path indication information.

Optionally, the transmission path indication information comprises one of the following:
a transmission path type;
a transmission path type corresponding to a first bearer or a first logical channel;
a transmission path type corresponding to a specific object;
a transmission path type corresponding to a specific object and a first bearer or a first logical channel;
G-RNTI indication information for multicast scheduling on the Uu interface of the first terminal and/or the second terminal;
G-RNTI indication information for broadcast scheduling on the Uu interface of the first terminal and/or the second terminal;
wherein the transmission path type comprises: a Uu link or a sidelink link;
the specific object comprises at least one of the following:
   a destination Layer 2 Identity;
   a combination of a source Layer 2 Identity and a destination Layer 2 Identity;
   a combination of a source Layer 2 Identity, a destination Layer 2 Identity, and a cast type.

The present disclosure further provides a processor-readable storage medium, wherein the processor-readable storage medium stores a computer program, and the computer program is configured to cause the processor to execute the above-described method.

The beneficial effects of the present disclosure are as follows:
according to the above solution, by receiving a first message sent by the network device including a mapping relationship between first sidelink interface identification information and first Uu interface identification information, the terminal is enabled to establish an association between a Uu link and a sidelink link, thereby enabling flexible switching between two types of transmission paths while ensuring service continuity.

### BRIEF DESCRIPTION OF THE DRAWINGS

To more clearly illustrate the technical solutions in the embodiments of the present disclosure or the prior art, brief introductions of the drawings required in the description of the embodiments or the prior art are provided below. It is evident that the accompanying drawings described below only illustrate some embodiments of the present disclosure; other drawings may also be obtained by those skilled in the art without creative efforts.
FIG. 1 shows a schematic diagram of a network system applicable to an embodiment of the present disclosure;
FIG. 2 shows a first schematic flow chart of an information transmission method according to an embodiment of the present disclosure;
FIG. 3 shows a second schematic flow chart of an information transmission method according to an embodiment of the present disclosure;
FIG. 4 shows a third schematic flow chart of an information transmission method according to an embodiment of the present disclosure;
FIG. 5 shows a first detailed flow chart of a specific application scenario according to an embodiment of the present disclosure;
FIG. 6 shows a second detailed flow chart of a specific application scenario according to an embodiment of the present disclosure;
FIG. 7 shows a first schematic unit diagram of an information transmission apparatus according to an embodiment of the present disclosure;
FIG. 8 shows a schematic diagram of a terminal according to an embodiment of the present disclosure;
FIG. 9 shows a second schematic unit diagram of an information transmission apparatus according to an embodiment of the present disclosure;
FIG. 10 shows a schematic diagram of a network device according to an embodiment of the present disclosure;
FIG. 11 shows a third schematic unit diagram of an information transmission apparatus according to an embodiment of the present disclosure.

### DETAILED DESCRIPTION

The technical solutions in the embodiments of the present disclosure will be clearly and completely described below in conjunction with the accompanying drawings in the embodiments of the present disclosure. Obviously, the described embodiments are only part of the embodiments of the present disclosure, rather than all embodiments. Based on the embodiments in the present disclosure, all other embodiments obtained by those of ordinary skill in the art without creative efforts fall within the scope of protection of the present disclosure.

In the specification and the claims of the present disclosure, the terms "first" , "second" , etc., are used to distinguish similar objects, and are not necessarily used to describe specific sequences or priorities. It should be understood that the data used in such a way may be interchangeable under appropriate circumstances, so that the embodiments of the present disclosure described herein can also be implemented in a different sequence from those illustrated or described. In addition, the terms "comprise" and "have" , and any variations thereof, are intended to cover non-exclusive inclusions. For example, a process, method, system, product, or device that comprises a list of steps or elements is not limited to those expressly listed steps or elements, but may include other steps or elements that are not expressly listed or are inherent to the process, method, product, or device.

In the embodiments of the present disclosure, the term "and/or" describes the relationship between related objects and indicates that three relationships may exist. For example, "A and/or B" may indicate: A alone, both A and B, or B alone. The character "/" generally indicates an "or" relationship between the related objects before and after it. The term "a plurality of" in the embodiments of the present disclosure refers to two or more. Other quantifiers are interpreted in a similar way.

In the embodiments of the present disclosure, the terms "exemplary" or "for example" are used to indicate illustration, demonstration, or explanation. Any embodiment or design scheme described as "exemplary" or "for example" should not be construed as being preferred or more advantageous than other embodiments or design schemes. Specifically, the use of the terms "exemplary" or "for example" is intended to present the related concepts in a concrete manner.

Relevant concepts referred to in the present disclosure are briefly described below.

In conventional wireless communication, a cellular network communication mode is used, in which a terminal and a network device perform uplink and downlink data/control information transmission via a Uu interface.

Sidelink refers to a method in which nearby terminals can perform data transmission within a short-range distance via a sidelink link (also referred to as Sidelink or PC5 link). The radio interface corresponding to the Sidelink is referred to as the sidelink interface (also referred to as the Sidelink interface or PC5 interface).

The embodiments of the present disclosure will be described below with reference to the drawings. The information transmission method, apparatus, terminal, and network device provided in the embodiments of the present disclosure may be applied to a wireless communication system. The wireless communication system may be a system adopting the fifth generation (5G) mobile communication technology (hereinafter referred to as a 5G system). Those skilled in the art will understand that the 5G New Radio (5G NR) system is merely exemplary and not limiting.

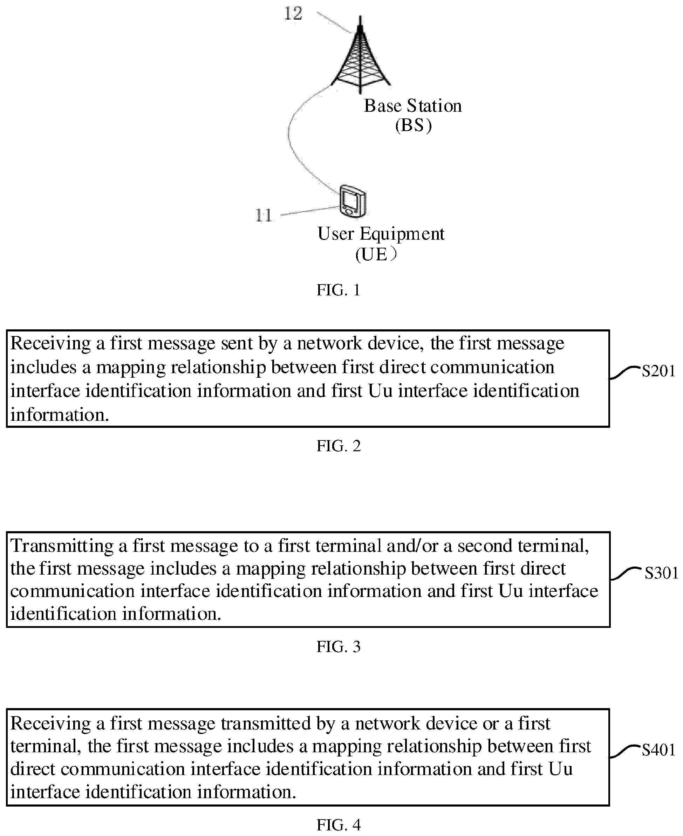

Referring to FIG. 1, FIG. 1 shows a schematic diagram of a network system applicable to an embodiment of the present disclosure. As shown in FIG. 1, the network system includes a user terminal 11 and a base station 12. The user terminal 11 may be a User Equipment (UE), for example, a mobile phone, a Tablet Personal Computer, a Laptop Computer, a Personal Digital Assistant (PDA), a Mobile Internet Device (MID), or a Wearable Device, etc. It should be noted that in the embodiments of the present disclosure, the specific type of the user terminal 11 is not limited. The base station 12 may be a 5G or later generation base station (for example, an NR Node B or 5G NR NB), or a base station in another communication system, also referred to as a Node B. It should be noted that in the embodiments of the present disclosure, a 5G base station is used as an example, but the specific type of the base station 12 is not limited.

The embodiments of the present disclosure provide an information transmission method, an apparatus, a terminal, and a network device, so as to solve the problem in related technologies that the mechanism cannot achieve flexible transmission path switching between two types of transmission paths under the premise of ensuring service continuity.

The method and apparatus are based on the same inventive concept. Since the principles for solving the problem by the apparatus and the method are similar, the implementations of the apparatus and the method may be referred to each other, and repeated descriptions are omitted for brevity.

As shown in FIG. 2, an information transmission method is provided according to an embodiment of the present disclosure, performed by a first terminal, comprising:
Step S201: Receiving, by the first terminal, a first message sent by a network device, wherein the first message includes a mapping relationship between first sidelink interface identification information and first Uu interface identification information.

It should be noted that the mapping relationship may be understood as a correspondence between the sidelink interface identification information and the Uu interface identification information, namely, which sidelink interface(s) correspond to which Uu interface(s), or vice versa. Furthermore, the Uu interface refers to the radio interface corresponding to the Uu link.

It should be further noted that the embodiments of the present disclosure enable the first terminal to determine the association between the two types of transmission paths, thereby achieving flexible switching between the two types of transmission paths under the premise of ensuring service continuity.

Optionally, in another embodiment of the present disclosure, the first sidelink interface identification information comprises one of the following:
A11. A destination Layer 2 (L2) Identity of a sidelink interface of the first terminal.

It should be noted that the destination Layer 2 Identity may be understood as the Layer 2 Identity used on the sidelink interface by the sidelink peer of the first terminal. The destination Layer 2 Identity may be used to identify the communication peer of the sidelink interface of the first terminal.

A12. A combination of the destination Layer 2 Identity of the sidelink interface of the first terminal and a cast type.

Optionally, the cast type comprises at least one of the following: unicast, multicast, and broadcast.

For example, the first sidelink interface identification information is a combination of the destination Layer 2 Identity of the sidelink interface of the first terminal and unicast. For example, the first sidelink interface identification information is a combination of the destination Layer 2 Identity of the sidelink interface of the first terminal and multicast. For example, the first sidelink interface identification information is a combination of the destination Layer 2 Identity of the sidelink interface of the first terminal and broadcast.

A13. A combination of a source Layer 2 Identity and a destination Layer 2 Identity of the sidelink interface of the first terminal.

It should be noted that the source Layer 2 Identity may be understood as the Layer 2 Identity used by the first terminal when acting as the sender on the sidelink interface.

A14. A combination of a source Layer 2 Identity, a destination Layer 2 Identity, and a cast type of the sidelink interface of the first terminal.

For example, the first sidelink interface identification information may be a combination of the source Layer 2 Identity, the destination Layer 2 Identity, and unicast of the sidelink interface of the first terminal; or a combination of the source Layer 2 Identity, the destination Layer 2 Identity, and multicast; or a combination of the source Layer 2 Identity, the destination Layer 2 Identity, and broadcast.

A15. A combination of a source Layer 2 Identity, a destination Layer 2 Identity, and a logical channel identifier of the sidelink interface of the first terminal.

A16. A combination of a source Layer 2 Identity, a destination Layer 2 Identity, a cast type, and a logical channel identifier of the sidelink interface of the first terminal.

For example, the first sidelink interface identification information may be a combination of the source Layer 2 Identity, the destination Layer 2 Identity, unicast, and a logical channel identifier of the sidelink interface of the first terminal; or a combination of the source Layer 2 Identity, the destination Layer 2 Identity, multicast, and the logical channel identifier; or a combination of the source Layer 2 Identity, the destination Layer 2 Identity, broadcast, and the logical channel identifier.

Optionally, in another embodiment of the present disclosure, the first Uu interface identification information comprises at least one of the following:
A21. A radio network temporary identity (RNTI) used by the first terminal on the Uu interface;
A22. An RNTI used by the second terminal on the Uu interface.
A23. Identification information of a network device and/or a cell serving the first terminal.

The identification information of the network device may be, for example, the ID or index of the network device; the identification information of the cell may be the ID or index of the cell.

A24. Identification information of a network device and/or a cell serving the second terminal.

It should be noted that the network device serving the first terminal and the network device serving the second terminal may be the same network device or different network devices.

A25. For broadcast or multicast, a group radio network temporary identity (G-RNTI) used by the second terminal on the Uu interface.

A26. For broadcast or multicast, identification information of a network device and/or a cell performing G-RNTI reception for the second terminal.

It should be noted that the network device may directly send the first message to both the first terminal and the second terminal, in which case the first terminal does not need to transmit the mapping relationship to the second terminal. Of course, in a case where the network device does not send the first message to the second terminal, optionally, in another embodiment of the present disclosure, after receiving the first message sent by the network device, the method further comprises:

Sending, via the sidelink interface, a second message to the second terminal, wherein the second message includes the mapping relationship between the first sidelink interface identification information and the first Uu interface identification information; and the second terminal serves as a sidelink interface peer of the first terminal, and the number of second terminals is greater than or equal to 1.

That is, when the first terminal receives the first message from the network device, it sends the first message to the second terminal.

Optionally, in another embodiment of the present disclosure, the method further comprises:
Sending a third message to the network device, wherein the third message carries identification information of the second terminal.

Preferably, the first terminal sends the third message to the network device before the first terminal receives the first message.

Optionally, in another embodiment of the present disclosure, the identification information of the second terminal comprises at least one of the following:
B11. A destination Layer 2 Identity of a sidelink interface corresponding to the second terminal.

That is, the identification information of the second terminal refers to the Layer 2 Identity of the second terminal when acting as the receiving end of the sidelink interface.

B12. A combination of the destination Layer 2 Identity of the sidelink interface corresponding to the second terminal and a cast type.

For example, the identification information of the second terminal may be a combination of the destination Layer 2 Identity of the sidelink interface corresponding to the second terminal and unicast; or a combination of the destination Layer 2 Identity and multicast; or a combination of the destination Layer 2 Identity and broadcast.

B13. Identification information of a second Uu interface corresponding to the second terminal.

Optionally, the identification information of the second Uu interface comprises at least one of the following:
B21. An RNTI used by the second terminal on the Uu interface.
B22. Identification information of a network device and/or a cell serving the second terminal.
B23. For broadcast or multicast, a G-RNTI used by the second terminal on the Uu interface.
B24. For broadcast or multicast, identification information of a network device and/or a cell performing G-RNTI reception for the second terminal.

Optionally, in another embodiment of the present disclosure, the third message further carries identification information of the first terminal.

Furthermore, the identification information of the first terminal is the source Layer 2 Identity of the sidelink interface corresponding to the first terminal.

Optionally, in another embodiment of the present disclosure, the third message is sent to the network device under the following specific condition:
Sending the third message to the network device when a first condition is met.

Wherein the first condition comprises at least one of the following:
B31. The first terminal receives a fourth message from the second terminal.

That is, when the first terminal receives the fourth message from the second terminal, it triggers the sending of the third message.

Specifically, the fourth message includes identification information of the second Uu interface corresponding to the second terminal.

B32. A channel quality of the sidelink interface between the first terminal and the second terminal is less than or equal to a first threshold.

That is, when the channel quality of the sidelink interface between the first terminal and the second terminal is less than or equal to the first threshold, the sending of the third message is triggered.

The first threshold may be preconfigured, configured by the network device, or specified by protocol.

B33. A channel quality of the sidelink interface between the first terminal and the second terminal is greater than or equal to a second threshold.

That is, when the channel quality of the sidelink interface between the first terminal and the second terminal is greater than or equal to the second threshold, the sending of the third message is triggered.

The second threshold may be preconfigured, configured by the network device, or specified by protocol.

B34. A channel quality of the Uu interface between the first terminal and the network device is less than or equal to a third threshold.

That is, when the channel quality of the Uu interface between the first terminal and the network device is less than or equal to the third threshold, the sending of the third message is triggered.

The third threshold may be preconfigured, configured by the network device, or specified by protocol.

B35. A channel quality of the Uu interface between the second terminal and the network device is less than or equal to a fourth threshold.

That is, when the channel quality of the Uu interface between the second terminal and the network device is less than or equal to the fourth threshold, the sending of the third message is triggered.

The fourth threshold may be preconfigured, configured by the network device, or specified by protocol.

B36. A channel quality of the Uu interface between the first terminal and the network device is greater than or equal to a fifth threshold.

That is, when the channel quality of the Uu interface between the first terminal and the network device is greater than or equal to the fifth threshold, the sending of the third message is triggered.

The fifth threshold may be preconfigured, configured by the network device, or specified by protocol.

B37. A channel quality of the Uu interface between the second terminal and the network device is greater than or equal to a sixth threshold.

That is, when the channel quality of the Uu interface between the second terminal and the network device is greater than or equal to the sixth threshold, the sending of the third message is triggered.

The sixth threshold may be preconfigured, configured by the network device, or specified by protocol.

B38. A cast type of the first terminal is changed.

That is, when the cast type of the first terminal changes, the sending of the third message is triggered. For example, if the cast type of the first terminal changes from unicast to multicast, the third message is triggered. In another example, if the cast type changes from unicast to broadcast, the third message is triggered. In yet another example, if the cast type changes from multicast to unicast, the third message is triggered.

B39. A cast type of one or more logical channels of the first terminal changes.

That is, if a cast type of one or more logical channels of the first terminal changes, a third message is triggered to be sent. For example, if the cast type of one logical channel of the first terminal changes from unicast to multicast, the third message is triggered. For another example, if the cast types of multiple logical channels of the first terminal change from broadcast to unicast, the third message is triggered.

Optionally, under another embodiment of the present disclosure, the method further comprises:
Receiving, by the first terminal, a fourth message sent by the second terminal, wherein the fourth message includes identification information of a second Uu interface corresponding to the second terminal.

Further optionally, the second terminal sends the fourth message to the first terminal under a second condition.

The second condition comprises at least one of the following:
C11. The first terminal and/or the second terminal establishes an RRC connection with a network device.

That is, if the first terminal and/or the second terminal establishes an RRC connection with the network device, the fourth message is triggered to be sent.

For example, if the second terminal determines that the first terminal establishes an RRC connection with the network device, the fourth message is triggered. If the second terminal determines that both the first terminal and the second terminal establish an RRC connection with the network device, the fourth message is triggered. If the second terminal determines that it establishes an RRC connection with the network device, the fourth message is triggered.

C12. The second terminal discovers the first terminal via a sidelink interface.

It should be noted that discovering the first terminal may be understood as the second terminal being able (permitted or capable) to establish a sidelink connection with the first terminal, even if such a connection has not yet been established.

That is, if the second terminal discovers the first terminal through the sidelink interface, the fourth message is triggered to be sent.

C13. The second terminal establishes a sidelink link (PC5-S connection) or a sidelink interface RRC connection (PC5-RRC connection) with the first terminal via the sidelink interface.

That is, if the second terminal establishes a PC5-S connection or a PC5-RRC connection with the first terminal via the sidelink interface, the fourth message is triggered to be sent.

Optionally, under another embodiment of the present disclosure, the method further comprises:
receiving, by the first terminal, a fifth message sent by the network device, wherein the fifth message carries transmission path indication information.

Further optionally, the network device sends the fifth message either simultaneously with the first message (i.e., both the first and fifth messages are sent together to the first terminal) or after the first message is sent to the first terminal.

Optionally, the transmission path indication information comprises one of the following:
D11. A transmission path type.

Optionally, the transmission path type comprises: a Uu link or a sidelink link.

D12. A transmission path type corresponding to a first bearer or a first logical channel.

D13. A transmission path type corresponding to a specific object.

Optionally, the specific object comprises at least one of the following:
D131. A destination Layer 2 Identity.
D132. A combination of a source Layer 2 Identity and a destination Layer 2 Identity.
D133. A combination of a source Layer 2 Identity, a destination Layer 2 Identity, and a cast type.

D14. A transmission path type corresponding to the first bearer or the first logical channel for the specific object.

For example, the transmission path indication information may indicate the transmission path type corresponding to the first bearer or the first logical channel for the destination Layer 2 Identity. For another example, it may indicate the path type for the combination of the source Layer 2 Identity and the destination Layer 2 Identity. In another example, the indication may specify the path type for the combination of the source Layer 2 Identity, the destination Layer 2 Identity, and unicast. Alternatively, it may indicate the type for the combination of the source Layer 2 Identity, the destination Layer 2 Identity, and multicast.

D15. G-RNTI indication information used by the first terminal and/or the second terminal for multicast scheduling on the Uu interface.

It should be noted that the G-RNTI used by the second terminal and the first terminal for multicast scheduling on the Uu interface may be the same or different.

D16. G-RNTI indication information used by the first terminal and/or the second terminal for broadcast scheduling on the Uu interface.

It should be noted that the G-RNTI used by the second terminal and the first terminal for broadcast scheduling on the Uu interface may be the same or different.

Optionally, an implementation manner of receiving the fifth message sent by the network device comprises:
receiving, by the first terminal, the fifth message from the network device via first signaling.

Wherein the first signaling comprises one of: Radio Resource Control (RRC) signaling; Medium Access Control Control Element (MAC CE); and physical layer signaling.

It should be noted that the network device may send the fifth message separately to the first terminal and the second terminal. In this case, it is not necessary for the first terminal to transmit the transmission path indication information to the second terminal. Of course, in a case where the network device does not send the fifth message to the second terminal, optionally, under another embodiment of the present disclosure, the following is further included after receiving the fifth message from the network device:
sending, by the first terminal, a sixth message to the second terminal, wherein the sixth message carries the transmission path indication information.

It should be further noted that, in the embodiments of the present disclosure, any message sent by the network device to the terminal (i.e., the first terminal and/or the second terminal) may be sent using RRC signaling, MAC CE, or physical layer signaling. When RRC signaling is used, the RRC signaling may be sidelinkUEInformation.

It should also be noted that how a mapping relationship between different types of transmission paths is established depends on the implementation of the network device. For example, after receiving a third message sent by the first terminal, the network device may acquire a source Layer 2 Identity and a destination Layer 2 Identity of the sidelink interface between the first terminal and the second terminal, as well as RNTIs used by the first terminal and the second terminal on the Uu interface, based on the third message, to establish an association between the RNTI and the destination Layer 2 Identity, thereby obtaining a mapping relationship between different types of transmission paths. As another example, after receiving the third message sent by the first terminal, the network device may acquire a source Layer 2 Identity, a destination Layer 2 Identity, and a cast type of the sidelink interface between the first terminal and the second terminal, and determine an RNTI used by the first terminal on the Uu interface and a G-RNTI used by the network device when broadcasting the multicast or broadcast service on the Uu interface, and associate the source Layer 2 Identity, the destination Layer 2 Identity, and the cast type of the sidelink interface between the first terminal and the second terminal with the RNTI used by the first terminal on the Uu interface and the G-RNTI used by the network device when broadcasting the multicast or broadcast service on the Uu interface, thereby obtaining the mapping relationship between different types of transmission paths.

It should also be noted that, after acquiring the mapping relationship, the first terminal and the second terminal may determine, based on the mapping relationship between the first sidelink interface identifier and the first Uu interface identifier, the Uu interface identifier to be used for transmitting data corresponding to the first sidelink interface identifier on the Uu interface. For example, for the first terminal as a transmitting terminal, the resources scheduled by the Uu interface RNTI are used for transmitting the data corresponding to the combination of the source Layer 2 Identity and the destination Layer 2 Identity. For the second terminal as a receiving terminal, the resources scheduled by the Uu interface RNTI are monitored for receiving the data corresponding to the combination of the source Layer 2 Identity and the destination Layer 2 Identity. As another example, in the case of broadcast, for the first terminal as a transmitting terminal, the resources scheduled by the Uu interface RNTI are used for transmitting the data corresponding to the combination of the source Layer 2 Identity and the destination Layer 2 Identity. For the second terminal as a receiving terminal, the resources scheduled by the Uu interface G-RNTI are monitored for receiving the data corresponding to the combination of the source Layer 2 Identity and the destination Layer 2 Identity.

It should be noted that, through at least one embodiment provided by the present disclosure, an information transmission method is provided, which can implement flexible switching of data transmission between a sidelink transmission path and a Uu path, thereby better improving the overall resource utilization efficiency of Uu/SL and enhancing service continuity.

The technical solution provided in the embodiments of the present disclosure can be applied to various systems, particularly to 5G systems. For example, applicable systems may include a Global System for Mobile communication (GSM) system, a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (WiMAX) system, a 5G New Radio (NR) system, and the like. These systems all include terminals (also referred to as terminal devices) and network devices. The systems may also include a core network part, such as an Evolved Packet System (EPS) and a 5G System (5GS).

The terminal device described in the embodiments of the present disclosure may refer to a device that provides voice and/or data connectivity to a user, such as a handheld device with wireless connectivity capabilities, or another processing device connected to a wireless modem. In different systems, the terminal device may be referred to by different names. For example, in a 5G system, a terminal device may be referred to as User Equipment (UE). A wireless terminal device may communicate with one or more core networks (CN) via a Radio Access Network (RAN), and may be a mobile terminal device such as a mobile phone (also referred to as a "cellular" phone), or a computer equipped with a mobile terminal device. For example, it may be a portable, pocket-sized, handheld, computer-integrated or vehicle-mounted mobile device, which exchanges voice and/or data with the RAN. Examples include Personal Communication Service (PCS) phones, cordless phones, Session Initiation Protocol (SIP) phones, Wireless Local Loop (WLL) stations, Personal Digital Assistants (PDA), and the like. The wireless terminal device may also be referred to as a system, subscriber unit, subscriber station, mobile station, mobile, remote station, access point, remote terminal, access terminal, user terminal, user agent, or user device, and is not limited in the embodiments of the present disclosure.

The network device described in the embodiments of the present disclosure may be a base station, which may include multiple cells that provide services to terminal devices. Depending on the specific application scenario, a base station may also be referred to as an access point, or it may be a device in an access network that communicates with wireless terminal devices over an air interface through one or more sectors, or by other names. The network device may be used to interchange received air frames with Internet Protocol (IP) packets and act as a router between wireless terminal devices and the remainder of the access network, which may include an IP communication network. The network device may also coordinate the management of air interface attributes. For example, the network device in the embodiments of the present disclosure may be a Base Transceiver Station (BTS) in a Global System for Mobile communications (GSM) or Code Division Multiple Access (CDMA) system; a NodeB in a Wideband Code Division Multiple Access (WCDMA) system; an evolved Node B (eNB or e-NodeB) in a Long Term Evolution (LTE) system; a gNB in a 5G network architecture; or other network devices such as Home evolved Node B (HeNB), relay nodes, femtocells, or picocells. The embodiments of the present disclosure are not limited thereto. In some network structures, the network device may include a Centralized Unit (CU) node and a Distributed Unit (DU) node, which may be geographically separated.

A network device and a terminal device may each use one or more antennas to perform Multiple Input Multiple Output (MIMO) transmission. The MIMO transmission may be Single User MIMO (SU-MIMO) or Multiple User MIMO (MU-MIMO). Depending on the shape and quantity of the antenna configuration, MIMO transmission may be implemented as Two-Dimensional MIMO (2D-MIMO), Three-Dimensional MIMO (3D-MIMO), Full Dimension MIMO (FD-MIMO), or massive MIMO (massive-MIMO), and may also include diversity transmission, precoding transmission, or beamforming transmission.

As shown in FIG. 3, an information transmission method is provided in the embodiment of the present disclosure, which is performed by a network device, comprising:
Step S301: sending, by the network device, a first message to a first terminal and/or a second terminal, wherein the first message includes a mapping relationship between first sidelink interface identification information and first Uu interface identification information;
wherein the second terminal serves as a sidelink interface peer of the first terminal.

Optionally, the first sidelink interface identification information comprises one of the following:
a destination Layer 2 Identity of the sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identifier of the sidelink interface of the first terminal;
a combination of a source Layer 2 Identity, a destination Layer 2 Identity, a cast type, and a logical channel identifier of the sidelink interface of the first terminal.

Wherein, the cast type comprises at least one of the following: unicast, multicast, and broadcast.

Optionally, the first Uu interface identification information comprises at least one of the following:
a radio network temporary identifier (RNTI) used by the first terminal on a Uu interface;
an RNTI used by the second terminal on a Uu interface;
identification information of a network device and/or a cell serving the first terminal;
identification information of a network device and/or a cell serving the second terminal;
for broadcast or multicast, a group radio network temporary identifier (G-RNTI) used by the second terminal on a Uu interface;
for broadcast or multicast, identification information of a network device and/or a cell performing G-RNTI reception for the second terminal.

Optionally, the method further comprises:
receiving, by the network device, a third message sent by the first terminal and/or the second terminal, wherein the third message carries identification information of the second terminal.

Optionally, the identification information of the second terminal comprises at least one of the following:
a destination Layer 2 Identity of the sidelink interface corresponding to the second terminal;
a combination of the destination Layer 2 Identity of the sidelink interface corresponding to the second terminal and a cast type;
identification information of the second Uu interface corresponding to the second terminal.

Optionally, the third message further carries identification information of the first terminal.

Optionally, the identification information of the first terminal is a source Layer 2 Identity of the sidelink interface corresponding to the first terminal.

Optionally, after sending the first message to the first terminal and/or the second terminal, the method further comprises:
sending, by the network device, a fifth message to the first terminal and/or the second terminal, wherein the fifth message carries transmission path indication information.

Optionally, the operation of sending the fifth message to the first terminal and/or the second terminal comprises:
sending, by the network device, the fifth message to the first terminal and/or the second terminal via first signaling;
wherein the first signaling comprises one of the following: Radio Resource Control (RRC) signaling, Medium Access Control Control Element (MAC CE), and physical layer signaling.

Optionally, the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel for a specific object;
G-RNTI indication information for multicast scheduling on a Uu interface by the first terminal and/or the second terminal;
G-RNTI indication information for broadcast scheduling on a Uu interface by the first terminal and/or the second terminal;
wherein the transmission path type comprises: Uu link or sidelink link;
the specific object comprises at least one of the following:
   a destination Layer 2 Identity;
   a combination of a source Layer 2 Identity and a destination Layer 2 Identity;
   a combination of a source Layer 2 Identity, a destination Layer 2 Identity, and a cast type.

It should be noted that all implementations in the above embodiments are applicable to the embodiment of the information transmission method applied to the network device side, and the same technical effect can be achieved. Details are not repeated here.

As shown in FIG. 4, an information transmission method is provided in the embodiment of the present disclosure, which is performed by a second terminal, comprising:
Step S401: receiving, by the second terminal, a first message sent by a network device or a first terminal, wherein the first message includes a mapping relationship between first sidelink interface identification information and first Uu interface identification information;
wherein the second terminal serves as a sidelink interface peer of the first terminal.

Optionally, the first sidelink interface identification information comprises one of the following:
a destination Layer 2 Identity of the sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identifier of the sidelink interface of the first terminal;
a combination of a source Layer 2 Identity, a destination Layer 2 Identity, a cast type, and a logical channel identifier of the sidelink interface of the first terminal.

Wherein, the cast type comprises at least one of the following: unicast, multicast, and broadcast.

Optionally, the first Uu interface identification information comprises at least one of the following:
a radio network temporary identifier (RNTI) used by the first terminal on a Uu interface;
an RNTI used by the second terminal on a Uu interface;
identification information of a network device and/or a cell serving the first terminal;
identification information of a network device and/or a cell serving the second terminal;
for broadcast or multicast, a group radio network temporary identifier (G-RNTI) used by the second terminal on a Uu interface;
for broadcast or multicast, identification information of a network device and/or a cell performing G-RNTI reception for the second terminal.

Optionally, the method further comprises:
sending, by the second terminal, a third message to a network device, wherein the third message carries identification information of the second terminal.

Optionally, the identification information of the second terminal comprises at least one of the following:
a destination Layer 2 Identity of the sidelink interface corresponding to the second terminal;
a combination of the destination Layer 2 Identity of the sidelink interface corresponding to the second terminal and a cast type;
identification information of the second Uu interface corresponding to the second terminal.

Optionally, the method further comprises:
sending, by the second terminal, a fourth message to the first terminal, wherein the fourth message comprises identification information of the second Uu interface corresponding to the second terminal.

Optionally, the identification information of the second Uu interface comprises at least one of the following:
an RNTI used by the second terminal on a Uu interface;
identification information of a network device and/or a cell serving the second terminal;
for broadcast or multicast, a G-RNTI used by the second terminal on a Uu interface;
for broadcast or multicast, identification information of a network device and/or a cell performing G-RNTI reception for the second terminal.

Optionally, the operation of sending the fourth message to the first terminal comprises:
sending, by the second terminal, the fourth message to the first terminal upon satisfying a second condition;
wherein the second condition comprises at least one of the following:
   the first terminal and/or the second terminal establishes a radio resource control (RRC) connection with the network device;
   the second terminal discovers the first terminal via a sidelink interface;
   the second terminal establishes a sidelink interface sidelink link PC5-S connection or a PC5-RRC connection with the first terminal via the sidelink interface.

Optionally, the method further comprises:
receiving, by the second terminal, a fifth message sent by a network device or the first terminal, wherein the fifth message carries transmission path indication information.

Optionally, the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel for a specific object;
G-RNTI indication information for multicast scheduling on a Uu interface by the first terminal and/or the second terminal;
G-RNTI indication information for broadcast scheduling on a Uu interface by the first terminal and/or the second terminal;
wherein the transmission path type comprises: Uu link or sidelink link;
the specific object comprises at least one of the following:
   a destination Layer 2 Identity;
   a combination of a source Layer 2 Identity and a destination Layer 2 Identity;
   a combination of a source Layer 2 Identity, a destination Layer 2 Identity, and a cast type.

It should be noted that all implementations in the above embodiments are applicable to the embodiment of the information transmission method applied to the second terminal side, and the same technical effect can be achieved. Details are not repeated here.

Specific application scenarios of the present disclosure are described in detail below.

### Application Scenario I: Establishing a Mapping Relationship Between the Uu Transmission Path and the Sidelink Interface Transmission Path in a Unicast Scenario

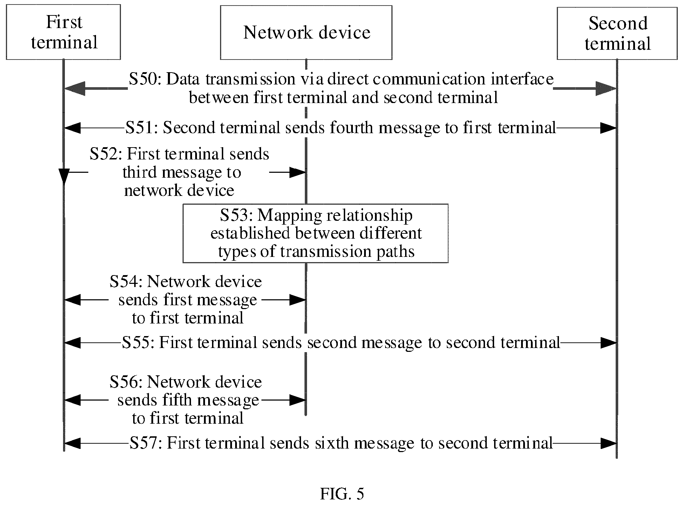

As shown in FIG. 5, the process mainly comprises the following steps:
Step S50: data is transmitted between the first terminal and the second terminal using a sidelink interface;
Step S51: the second terminal sends a fourth message to the first terminal.

It should be noted that this step is optional. The second terminal may send the fourth message to the first terminal, or may perform the same behavior as the first terminal and directly send the third message to the network device.

The fourth message comprises identification information of the second Uu interface corresponding to the second terminal. The fourth message is an end-to-end signaling between the first terminal and the second terminal.

Specifically, the identification information of the second Uu interface comprises at least one of the following:
an RNTI used by the second terminal on a Uu interface;
identification information of a network device and/or a cell serving the second terminal;
for broadcast or multicast, a G-RNTI used by the second terminal on a Uu interface;
for broadcast or multicast, identification information of a network device and/or a cell performing G-RNTI reception for the second terminal.

Step S52: The first terminal sends a third message to the network device.

It should be noted that the third message needs to carry at least identification information of the second terminal.

Specifically, the identification information of the second terminal comprises at least one of the following:
a destination Layer 2 Identity of the sidelink interface corresponding to the second terminal;
a combination of the destination Layer 2 Identity of the sidelink interface corresponding to the second terminal and a cast type;
identification information of the second Uu interface corresponding to the second terminal.

Optionally, the third message may further carry identification information of the first terminal. Specifically, the identification information of the first terminal may be the source Layer 2 Identity of the sidelink interface corresponding to the first terminal.

Step S53: A mapping relationship between different types of transmission paths is established.

It should be noted that transmission over a Uu link and transmission over a sidelink interface are regarded as different types of transmission paths.

How the mapping relationship between different types of transmission paths is established specifically depends on the implementation of the network device. For example, in this case, after receiving the third message sent by the first terminal, the network device obtains the source L2 Identity and destination L2 Identity of the sidelink interface between the first terminal and the second terminal, and the RNTIs used by the first and second terminals on the Uu interface, and establishes an association between the RNTI and the destination L2 Identity to obtain the mapping relationship between different types of transmission paths.

Step S54: The network device sends a first message to the first terminal.

It should be noted that in this step, the network device may send the first message to the first terminal and/or the second terminal. If the network device sends the first message only to the first terminal, step S55 needs to be performed; otherwise, step S55 may be omitted.

The first message comprises a mapping relationship between the first sidelink interface identification and the first Uu interface identification.

Specifically, the first sidelink interface identification information comprises one of the following:
a destination Layer 2 Identity of the sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identifier of the sidelink interface of the first terminal;
a combination of a source Layer 2 Identity, a destination Layer 2 Identity, a cast type, and a logical channel identifier of the sidelink interface of the first terminal.

Specifically, the first Uu interface identification information comprises at least one of the following:
an RNTI used by the first terminal on a Uu interface;
an RNTI used by the second terminal on a Uu interface;
identification information of a network device and/or a cell serving the first terminal;
identification information of a network device and/or a cell serving the second terminal;
for broadcast or multicast, a G-RNTI used by the second terminal on a Uu interface;
for broadcast or multicast, identification information of a network device and/or a cell performing G-RNTI reception for the second terminal.

It should also be noted that the first terminal and the second terminal may determine the Uu interface identification required for transmitting data corresponding to the first sidelink interface identification on the Uu interface according to the mapping relationship between the first sidelink interface identification and the first Uu interface identification. For example, for the first terminal as a sending terminal, when data corresponding to the combination of source L2 Identity and destination L2 Identity is to be transmitted over the Uu interface, resources scheduled by the RNTI of the Uu interface need to be used. For the second terminal as a receiving terminal, when data corresponding to the combination of source L2 Identity and destination L2 Identity is to be received over the Uu interface, the second terminal needs to monitor the resources scheduled by the RNTI of the Uu interface.

Step S55: The first terminal sends a second message to the second terminal;
It should be noted that this step is optional. The first terminal sends the second message to the second terminal via the sidelink interface, wherein the second message comprises a mapping relationship between the first sidelink interface identification and the first Uu interface identification. The triggering condition for sending the second message is that the first terminal receives the first message from the network device.

Step S56: The network device sends a fifth message to the first terminal;
It should be noted that in this step, the network device may send the fifth message to the first terminal and/or the second terminal. If the network device sends the first message only to the first terminal, step S57 needs to be performed; otherwise, step S57 may be omitted.

The first terminal receives the fifth message from the network device, and the fifth message carries transmission path indication information. The fifth message may be sent via RRC signaling, MAC CE, or physical layer signaling.

Specifically, the transmission path indication information comprises one of the following:
a transmission path type;
a transmission path type corresponding to a first bearer or a first logical channel;
a transmission path type corresponding to a specific object;
a transmission path type corresponding to a specific object and the first bearer or the first logical channel;
G-RNTI indication information for multicast scheduling over a Uu interface for the first terminal and/or the second terminal;
G-RNTI indication information for broadcast scheduling over a Uu interface for the first terminal and/or the second terminal.

Step S57: The first terminal sends a sixth message to the second terminal;
It should be noted that this step is optional. The first terminal sends the sixth message to the second terminal, and the sixth message carries the transmission path indication information.

### Application Case 2: Establishment of mapping relationship between Uu transmission path and sidelink interface transmission path in multicast/broadcast scenarios

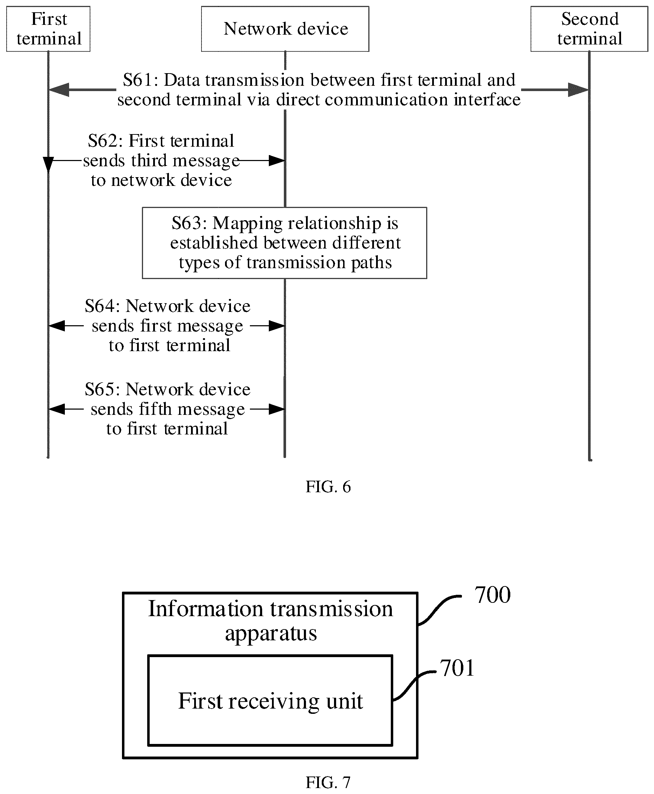

As shown in FIG. 6, the process mainly includes the following steps:
Step S61: The first terminal and the second terminal perform data transmission using a sidelink interface;
Step S62: The first terminal sends a third message to the network device;

It should be noted that the third message needs to carry at least identification information of the second terminal.

Specifically, the identification information of the second terminal comprises at least one of the following:
a destination Layer 2 Identity of the sidelink interface corresponding to the second terminal;
a combination of the destination Layer 2 Identity of the sidelink interface corresponding to the second terminal and a cast type;
identification information of the second Uu interface corresponding to the second terminal.

Optionally, the third message may further carry identification information of the first terminal. Specifically, the identification information of the first terminal may be the source Layer 2 Identity of the sidelink interface corresponding to the first terminal.

Step S63: Establishment of a mapping relationship between different types of transmission paths;
It should be noted that transmission over the Uu link and transmission over the sidelink interface are regarded as different types of transmission paths.

The specific method for establishing the mapping relationship between different types of transmission paths depends on the implementation of the network device. For example, in this case, after receiving the third message sent by the first terminal, the network device obtains the source Layer 2 Identity, the destination Layer 2 Identity, and the cast type of the sidelink interface between the first terminal and the second terminal according to the third message, determines the RNTI used by the first terminal on the Uu interface and the G-RNTI used by the network device for broadcasting the multicast/broadcast service on the Uu interface, and associates the source Layer 2 Identity, the destination Layer 2 Identity, and the cast type of the sidelink interface with the RNTI used by the first terminal on the Uu interface and the G-RNTI used by the network device for broadcasting the multicast/broadcast service on the Uu interface, so as to obtain the mapping relationship between different types of transmission paths.

Step S64: The network device sends a first message to the first terminal;
It should be noted that in this step, the network device may send the first message to the first terminal and/or the second terminal.

The first message comprises a mapping relationship between the first sidelink interface identification and the first Uu interface identification.

Specifically, the first sidelink interface identification information comprises one of the following:
a destination Layer 2 Identity of the sidelink interface of the first terminal;
a combination of the destination Layer 2 Identity of the sidelink interface of the first terminal and a cast type;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal.

A combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal.

Specifically, the first Uu interface identification information includes at least one of the following items:
an RNTI used by the first terminal on the Uu interface;
an RNTI used by the second terminal on the Uu interface;
identification information of a network device and/or cell serving the first terminal;
identification information of a network device and/or cell serving the second terminal;
for multicast or broadcast, a group RNTI (G-RNTI) used by the second terminal on the Uu interface;
for multicast or broadcast, identification information of a network device and/or cell from which the second terminal receives data via the G-RNTI.

It should be noted that a Uu interface identifier to be used for transmitting data corresponding to the first sidelink interface identifier on the Uu interface may be determined by the first terminal and the second terminal based on the mapping relationship between the first sidelink interface identifier and the first Uu interface identifier. For example, in a broadcast scenario, when serving as a sending terminal, the first terminal is required to use Uu interface resources scheduled by the RNTI to transmit data corresponding to the combination of the source Layer 2 Identity and the destination Layer 2 Identity; when serving as a receiving terminal, the second terminal is required to monitor Uu interface resources scheduled by the G-RNTI to receive the corresponding data.

Step S65: sending, by the network device, a fifth message to the first terminal;
It should be noted that the fifth message may be sent by the network device to the first terminal and/or the second terminal in this step.
receiving, by the first terminal, the fifth message from the network device, wherein the fifth message carries transmission path indication information. The fifth message may be transmitted using RRC signaling, MAC CE, or physical layer signaling.

Specifically, the transmission path indication information includes one of the following items:
a transmission path type;
a transmission path type corresponding to a first bearer or a first logical channel;
a transmission path type corresponding to a specific object;
a transmission path type corresponding to a first bearer or a first logical channel for the specific object;
G-RNTI indication information used by the first terminal and/or the second terminal for multicast scheduling on the Uu interface;
G-RNTI indication information used by the first terminal and/or the second terminal for broadcast scheduling on the Uu interface.

As shown in FIG. 7, an information transmission apparatus 700 is provided according to an embodiment of the present disclosure. The apparatus is applied to a first terminal and comprises:
a first receiving unit 701, configured to receive a first message sent by a network device, wherein the first message includes a mapping relationship between a first sidelink interface identifier and a first Uu interface identifier.

Optionally, after the first receiving unit 701 receives the first message sent by the network device, the apparatus further comprises:
a second sending unit, configured to send a second message to a second terminal via the sidelink interface, wherein the second message includes the mapping relationship between the first sidelink interface identifier and the first Uu interface identifier. The second terminal is a peer communication terminal of the first terminal via the sidelink interface, and the number of the second terminals is greater than or equal to one.

Optionally, the first sidelink interface identification information includes one of the following items:
a destination Layer 2 Identity of the sidelink interface of the first terminal;
a combination of a destination Layer 2 Identity and a cast type of the sidelink interface of the first terminal;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal;
wherein the cast type includes at least one of: unicast, multicast, and broadcast.

Optionally, the first Uu interface identification information includes at least one of the following items:
an RNTI used by the first terminal on the Uu interface;
an RNTI used by the second terminal on the Uu interface;
identification information of a network device and/or a cell serving the first terminal;
identification information of a network device and/or a cell serving the second terminal;
for multicast or broadcast, a G-RNTI used by the second terminal on the Uu interface;
for multicast or broadcast, identification information of a network device and/or a cell from which the second terminal receives via the G-RNTI.

Optionally, the apparatus further comprises:
a third sending unit, configured to send a third message to a network device, wherein the third message carries identification information of the second terminal.

Optionally, the identification information of the second terminal includes at least one of the following items:
a destination Layer 2 Identity of a sidelink interface corresponding to the second terminal;
a combination of a destination Layer 2 Identity and a cast type of a sidelink interface corresponding to the second terminal;
identification information of a second Uu interface corresponding to the second terminal.

Optionally, the third message further carries identification information of the first terminal.

Optionally, the identification information of the first terminal is a source Layer 2 Identity of a sidelink interface corresponding to the first terminal.

Optionally, the apparatus further comprises:
a third receiving unit, configured to receive a fourth message sent by the second terminal, wherein the fourth message includes identification information of a second Uu interface corresponding to the second terminal.

Optionally, the identification information of the second Uu interface includes at least one of the following items:
an RNTI used by the second terminal on the Uu interface;
identification information of a network device and/or a cell serving the second terminal;
for multicast or broadcast, a G-RNTI used by the second terminal on the Uu interface;
for multicast or broadcast, identification information of a network device and/or a cell from which the second terminal receives via the G-RNTI.

Optionally, the third sending unit is configured to:
send the third message to the network device when a first condition is satisfied;
wherein the first condition includes at least one of the following items:
   the first terminal receives the fourth message from the second terminal;
   a channel quality of a sidelink interface between the first terminal and the second terminal is less than or equal to a first threshold;
   a channel quality of a sidelink interface between the first terminal and the second terminal is greater than or equal to a second threshold;
   a channel quality of the Uu interface between the first terminal and the network device is less than or equal to a third threshold;
   a channel quality of the Uu interface between the second terminal and the network device is less than or equal to a fourth threshold;
   a channel quality of the Uu interface between the first terminal and the network device is greater than or equal to a fifth threshold;
   a channel quality of the Uu interface between the second terminal and the network device is greater than or equal to a sixth threshold;
   a cast type of the first terminal is changed;
   a cast type of one or more logical channels of the first terminal is changed.

Optionally, the apparatus further comprises:
a fourth receiving unit, configured to receive a fifth message sent by the network device, wherein the fifth message carries transmission path indication information.

Optionally, the fourth receiving unit is configured to:
receive the fifth message sent by the network device via first signaling;
wherein the first signaling includes one of the following items: RRC signaling, MAC CE, or physical layer signaling.

Optionally, the apparatus further comprises:
a fourth sending unit, configured to send a sixth message to the second terminal, wherein the sixth message carries the transmission path indication information.

Optionally, the transmission path indication information includes one of the following items:
a transmission path type;
a transmission path type corresponding to a first bearer or a first logical channel;
a transmission path type corresponding to a specific object;
a transmission path type corresponding to a first bearer or a first logical channel for the specific object;
G-RNTI indication information used by the first terminal and/or the second terminal for multicast scheduling on the Uu interface;
G-RNTI indication information used by the first terminal and/or the second terminal for broadcast scheduling on the Uu interface;
wherein the transmission path type includes: Uu link or sidelink link;
the specific object includes at least one of the following items:
   a destination Layer 2 Identity;
   a combination of a source Layer 2 Identity and a destination Layer 2 Identity;
   a combination of a source Layer 2 Identity, a destination Layer 2 Identity, and a cast type.

It should be noted that the device embodiment corresponds one-to-one with the method embodiments described above, and all implementations in the method embodiments are applicable to the device embodiment and are capable of achieving the same technical effects.

It should be noted that the division of units in the embodiments of the present disclosure is illustrative and merely represents one logical functional division. In actual implementation, other division schemes may be adopted. In addition, each functional unit in various embodiments of the present disclosure may be integrated into one processing unit, or each unit may physically exist separately, or two or more units may be integrated into one unit. The integrated unit may be implemented in the form of hardware or as software functional units.

When the integrated unit is implemented as software functional units and sold or used as an independent product, it may be stored in a processor-readable storage medium. Based on this understanding, the technical solutions of the present disclosure or the parts thereof that contribute to the prior art can essentially be embodied in the form of a software product. The computer software product is stored in a storage medium and includes a plurality of instructions for causing a computer device (which may be a personal computer, server, or network device, etc.) or a processor to perform all or part of the steps of the method according to the embodiments of the present disclosure. The storage medium may include: USB flash drives, mobile hard disks, read-only memory (ROM), random access memory (RAM), magnetic disks, optical disks, or other media capable of storing program codes.

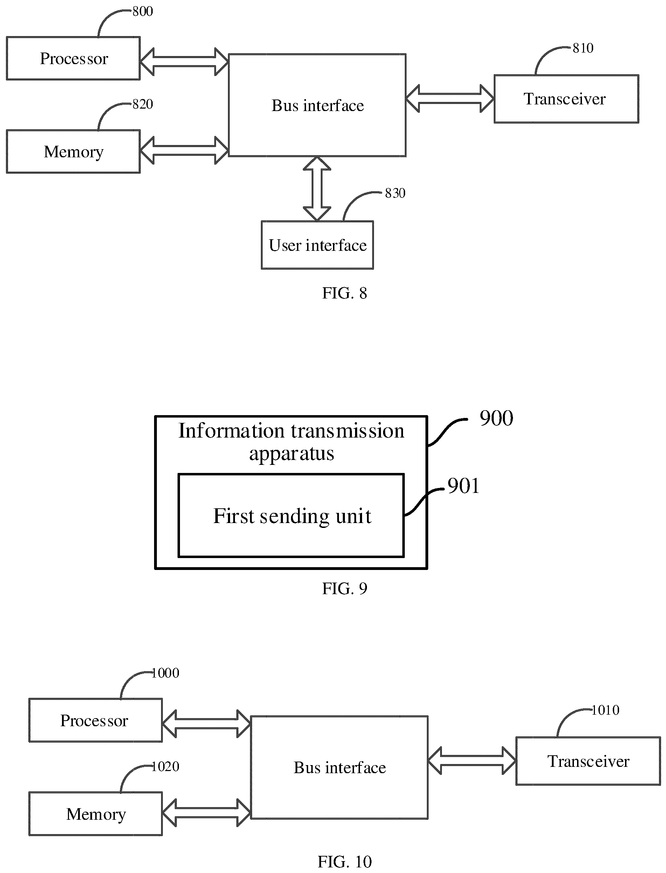

As shown in FIG. 8, a terminal is further provided according to an embodiment of the present disclosure. The terminal is a first terminal and includes a processor 800, a transceiver 810, a memory 820, and a program stored in the memory 820 and executable by the processor 800. The transceiver 810 is connected to the processor 800 and the memory 820 via a bus interface. The processor 800 is configured to read the program from the memory and execute the following process:
receiving, via the transceiver 810, a first message sent by a network device, wherein the first message includes a mapping relationship between a first sidelink interface identifier and a first Uu interface identifier;
the transceiver 810 is configured to receive and transmit data under the control of the processor 800;
wherein, in FIG. 8, the bus architecture may include any number of interconnected buses and bridges, and specifically links various circuits represented by the processor 800 (one or more processors) and the memory 820 (representing memory components). The bus architecture may also link various other circuits such as peripheral devices, voltage regulators, and power management circuits, which are well-known in the art and will not be described further herein. The bus interface provides interconnection. The transceiver 810 may include multiple components, such as a transmitter and a receiver, and provides components for communicating over various transmission media, which may include wireless channels, wired channels, optical fibers, and the like. For different user devices, a user interface 830 may also be provided as an interface capable of externally or internally connecting required devices, including but not limited to a keypad, display, speaker, microphone, joystick, etc.
the processor 800 is configured to manage the bus architecture and perform general processing. The memory 820 is configured to store data used by the processor 800 during operations;

Optionally, the processor 800 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture;
the processor is configured to execute any of the methods provided by the embodiments of the present disclosure according to executable instructions obtained by calling a computer program stored in the memory. The processor and the memory may also be arranged physically separately;
Optionally, the processor, configured to read the computer program from the memory, is further configured to perform the following operations:
   sending, via the transceiver 810, a second message to a second terminal through the sidelink interface, wherein the second message includes a mapping relationship between the first sidelink interface identifier and the first Uu interface identifier. The second terminal is a peer communication terminal of the first terminal via the sidelink interface, and the number of the second terminals is greater than or equal to one.

Optionally, the first sidelink interface identification information includes one of the following items:
a destination Layer 2 Identity of the sidelink interface of the first terminal;
a combination of a destination Layer 2 Identity and a cast type of the sidelink interface of the first terminal;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal;
wherein the cast type includes at least one of: unicast, multicast, and broadcast.

Optionally, the first Uu interface identification information includes at least one of the following items:
an RNTI used by the first terminal on the Uu interface;
an RNTI used by the second terminal on the Uu interface;
identification information of a network device and/or a cell serving the first terminal;
identification information of a network device and/or a cell serving the second terminal;
for multicast or broadcast, a group RNTI (G-RNTI) used by the second terminal on the Uu interface;
for multicast or broadcast, identification information of a network device and/or a cell from which the second terminal receives data via the G-RNTI.

Optionally, the processor, when reading the computer program in the memory, is further configured to perform the following operation:
sending, via the transceiver 810, a third message to a network device, wherein the third message carries identification information of the second terminal.

Optionally, the identification information of the second terminal includes at least one of the following items:
a destination Layer 2 Identity of the sidelink interface corresponding to the second terminal;
a combination of a destination Layer 2 Identity and a cast type of the sidelink interface corresponding to the second terminal;
identification information of a second Uu interface corresponding to the second terminal.

Optionally, the third message further carries identification information of the first terminal.

Optionally, the identification information of the first terminal is a source Layer 2 Identity of the sidelink interface corresponding to the first terminal.

Optionally, the processor, when reading the computer program in the memory, is further configured to perform the following operation:
receiving, via the transceiver 810, a fourth message sent by the second terminal, wherein the fourth message includes identification information of a second Uu interface corresponding to the second terminal.

Optionally, the identification information of the second Uu interface includes at least one of the following items:
an RNTI used by the second terminal on the Uu interface;
identification information of a network device and/or a cell serving the second terminal;
for multicast/broadcast, a G-RNTI used by the second terminal on the Uu interface;
for multicast/broadcast, identification information of a network device and/or a cell from which the second terminal receives data via the G-RNTI.

Optionally, the processor, when reading the computer program in the memory, is configured to perform the following operation:
sending, via the transceiver 810, a third message to the network device under a first condition;
wherein the first condition includes at least one of the following items:
   the first terminal receives the fourth message from the second terminal;
   channel quality of the sidelink interface between the first terminal and the second terminal is less than or equal to a first threshold;
   channel quality of the sidelink interface between the first terminal and the second terminal is greater than or equal to a second threshold;
   channel quality of the Uu interface between the first terminal and the network device is less than or equal to a third threshold;
   channel quality of the Uu interface between the second terminal and the network device is less than or equal to a fourth threshold;
   channel quality of the Uu interface between the first terminal and the network device is greater than or equal to a fifth threshold.
   the channel quality of the Uu interface between the second terminal and the network device is greater than or equal to a sixth threshold;
   the cast type of the first terminal is changed;
   the cast type of one or more logical channels of the first terminal is changed.

Optionally, the processor, configured to read the computer program in the memory, is further configured to execute:
receiving, via the transceiver 810, a fifth message sent by the network device, wherein the fifth message carries transmission path indication information.

Optionally, the processor, configured to read the computer program in the memory, is configured to execute:
receiving, via a first signaling, the fifth message sent by the network device;
wherein the first signaling includes one of: radio resource control (RRC) signaling, medium access control control element (MAC CE), or physical layer signaling.

Optionally, the processor, configured to read the computer program in the memory, is further configured to execute:
sending, via the transceiver 810, a sixth message to the second terminal, wherein the sixth message carries the transmission path indication information.

Optionally, the transmission path indication information includes one of:
a transmission path type;
a transmission path type corresponding to a first bearer or a first logical channel;
a transmission path type corresponding to a specific object;
a transmission path type corresponding to a first bearer or a first logical channel for the specific object;
G-RNTI indication information used by the first terminal and/or the second terminal for multicast scheduling on the Uu interface;
G-RNTI indication information used by the first terminal and/or the second terminal for broadcast scheduling on the Uu interface;
wherein the transmission path type includes: a Uu link or a sidelink link;
the specific object includes at least one of the following:
   a destination Layer 2 Identity;
   a combination of a source Layer 2 Identity and a destination Layer 2 Identity;
   a combination of a source Layer 2 Identity, a destination Layer 2 Identity, and a cast type]

It should be noted that the terminal provided in the present embodiment is capable of implementing all the method steps realized by the method embodiments described above and can achieve the same technical effects. Therefore, the same parts and beneficial effects as those in the method embodiments are not described in detail herein.

The present disclosure further provides a computer-readable storage medium having stored thereon a computer program, wherein the computer program, when executed by a processor, implements the steps of an information transmission method applied to a first terminal. The processor-readable storage medium may be any available medium or data storage device accessible by the processor, including but not limited to: magnetic storage (e.g., floppy disks, hard disks, tapes, magneto-optical disks (MO)), optical storage (e.g., CD, DVD, BD, HVD), and semiconductor storage (e.g., ROM, EPROM, EEPROM, non-volatile memory (NAND FLASH), solid-state drives (SSD)).

As shown in FIG. 9, an information transmission apparatus 900 is provided according to an embodiment of the present disclosure. The apparatus is applied to a network device and comprises:
a first sending unit 901, configured to send a first message to a first terminal and/or a second terminal, wherein the first message includes a mapping relationship between a first sidelink interface identification information and a first Uu interface identification information;
wherein the second terminal is a peer communication terminal of the first terminal via the sidelink interface.

Optionally, the first sidelink interface identification information includes one of the following:
a destination Layer 2 Identity of the sidelink interface of the first terminal;
a combination of a destination Layer 2 Identity and a cast type of the sidelink interface of the first terminal;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal;
wherein the cast type includes at least one of: unicast, multicast, and broadcast.

Optionally, the first Uu interface identification information includes at least one of the following:
an RNTI used by the first terminal on the Uu interface;
an RNTI used by the second terminal on the Uu interface;
identification information of a network device and/or cell serving the first terminal;
identification information of a network device and/or cell serving the second terminal;
for broadcast or multicast, a group RNTI (G-RNTI) used by the second terminal on the Uu interface;
for broadcast or multicast, identification information of a network device and/or cell from which the second terminal receives data via the G-RNTI.

Optionally, the apparatus further comprises:
a fifth receiving unit, configured to receive a third message sent by the first terminal and/or the second terminal, wherein the third message carries identification information of the second terminal.

Optionally, the identification information of the second terminal includes at least one of the following items:
a destination Layer 2 Identity of the sidelink interface corresponding to the second terminal;
a combination of a destination Layer 2 Identity and a cast type of the sidelink interface corresponding to the second terminal;
identification information of a second Uu interface corresponding to the second terminal.

Optionally, the third message further carries identification information of the first terminal.

Optionally, the identification information of the first terminal is a source Layer 2 Identity of the sidelink interface corresponding to the first terminal.

Optionally, after the first sending unit 901 sends the first message to the first terminal and/or the second terminal, the apparatus further comprises:
a fifth sending unit, configured to send a fifth message to the first terminal and/or the second terminal, wherein the fifth message carries transmission path indication information.

Optionally, the fifth sending unit is configured to:
send the fifth message to the first terminal and/or the second terminal via first signaling;
wherein the first signaling includes one of the following: radio resource control (RRC) signaling; medium access control control element (MAC CE); physical layer signaling.

Optionally, the transmission path indication information includes one of the following items:
a transmission path type;
a transmission path type corresponding to a first bearer or a first logical channel;
a transmission path type corresponding to a specific object;
a transmission path type corresponding to a first bearer or a first logical channel for the specific object;
G-RNTI indication information used by the first terminal and/or the second terminal for multicast scheduling on the Uu interface;
G-RNTI indication information used by the first terminal and/or the second terminal for broadcast scheduling on the Uu interface;
wherein the transmission path type includes: a Uu link or a sidelink link;
the specific object includes at least one of the following:
   a destination Layer 2 Identity;
   a combination of a source Layer 2 Identity and a destination Layer 2 Identity;
   a combination of a source Layer 2 Identity, a destination Layer 2 Identity, and a cast type.

It should be noted that the apparatus embodiment corresponds one-to-one with the above method embodiment. All implementation manners in the above method embodiment are applicable to the apparatus embodiment and can achieve the same technical effects.

It should be noted that the division of units in the embodiments of the present disclosure is illustrative and merely represents one type of logical function division. Other division manners may be adopted in actual implementation. In addition, the functional units in each embodiment of the present disclosure may be integrated into one processing unit, or each unit may exist independently physically, or two or more units may be integrated into one unit. The integrated units may be implemented in the form of hardware or as software functional units.

If the integrated unit is implemented as a software functional unit and sold or used as an independent product, it can be stored in a storage medium readable by a processor. Based on this understanding, the technical solution of the present disclosure, essentially or as part of the contribution to the prior art, can be embodied as a software product. The computer software product is stored in a storage medium and includes several instructions for enabling a computer device (which may be a personal computer, server, or network device) or a processor to execute all or part of the steps of the method in the embodiments of the present disclosure. The aforementioned storage medium includes: USB flash drives, mobile hard disks, read-only memory (ROM), random access memory (RAM), magnetic disks, optical disks, and other media capable of storing program codes.

As shown in FIG. 10, an embodiment of the present disclosure further provides a network device, including a processor 1000, a transceiver 1010, a memory 1020, and a program stored on the memory 1020 and executable on the processor 1000; wherein the transceiver 1010 is connected to the processor 1000 and the memory 1020 via a bus interface, and the processor 1000 is configured to read the program from the memory and perform the following process:
sending, via the transceiver 1010, a first message to the first terminal and/or the second terminal, wherein the first message includes a mapping relationship between a first sidelink interface identifier and a first Uu interface identifier;
wherein the second terminal is a peer communication terminal of the first terminal via the sidelink interface.

The transceiver 1010 is configured to receive and transmit data under the control of the processor 1000.

In FIG. 10, the bus architecture may include any number of interconnected buses and bridges, specifically linking together various circuits represented by the processor 1000 and the memory 1020. The bus architecture may also link various other circuits, such as peripheral devices, voltage regulators, and power management circuits, which are well known in the art and are therefore not further described herein. The bus interface provides the interface. The transceiver 1010 may comprise multiple elements, namely, a transmitter and a receiver, providing a unit for communication over various transmission media, which include, for example, wireless channels, wired channels, and optical fibers. For different user equipment, the user interface 1030 may also be an interface that can connect external or internal devices, including but not limited to a keypad, display, speaker, microphone, joystick, etc.

The processor 1000 is responsible for managing the bus architecture and general processing, and the memory 1020 can store data used by the processor 1000 during operation.

Optionally, the processor 1000 may be a central processing unit (CPU), application specific integrated circuit (ASIC), field-programmable gate array (FPGA), or complex programmable logic device (CPLD), and may also adopt a multi-core architecture.

The processor is configured to invoke the computer program stored in the memory and to execute any one of the methods provided in the embodiments of the present disclosure according to the obtained executable instructions. The processor and the memory may also be physically arranged separately.

Optionally, the first sidelink interface identification information includes one of the following items:
a destination Layer 2 Identity of the sidelink interface of the first terminal;
a combination of a destination Layer 2 Identity and a cast type of the sidelink interface of the first terminal.
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal.
wherein the cast type includes at least one of: unicast, multicast, and broadcast.

Optionally, the first Uu interface identification information includes at least one of the following items:
an RNTI used by the first terminal on the Uu interface;
an RNTI used by the second terminal on the Uu interface;
identification information of a network device and/or cell serving the first terminal;
identification information of a network device and/or cell serving the second terminal;
for broadcast or multicast, a group RNTI (G-RNTI) used by the second terminal on the Uu interface;
for broadcast or multicast, identification information of a network device and/or cell from which the second terminal receives via the G-RNTI.

Optionally, the processor is further configured to execute the following operation by reading the computer program stored in the memory:
receiving, via the transceiver 1010, a third message sent by the first terminal and/or the second terminal, wherein the third message carries identification information of the second terminal.

Optionally, the identification information of the second terminal includes at least one of the following items:
a destination Layer 2 Identity of the sidelink interface corresponding to the second terminal;
a combination of the destination Layer 2 Identity and the cast type of the sidelink interface corresponding to the second terminal;
identification information of the second Uu interface corresponding to the second terminal.

Optionally, the third message further carries identification information of the first terminal.

Optionally, the identification information of the first terminal is a source Layer 2 Identity of the sidelink interface corresponding to the first terminal.

Optionally, the processor is further configured to execute the following operation by reading the computer program stored in the memory:
sending, via the transceiver 1010, a fifth message to the first terminal and/or the second terminal, wherein the fifth message carries transmission path indication information.

Optionally, the processor is further configured to execute the following operation by reading the computer program stored in the memory:
sending, via the transceiver 1010 and through first signaling, the fifth message to the first terminal and/or the second terminal;
wherein the first signaling includes one of the following items: RRC signaling, MAC CE, or physical layer signaling.

Optionally, the transmission path indication information includes one of the following items:
a transmission path type;
a transmission path type corresponding to a first bearer or a first logical channel;
a transmission path type corresponding to a specific object;
a transmission path type corresponding to a first bearer or a first logical channel for the specific object;
G-RNTI indication information used by the first terminal and/or the second terminal for multicast scheduling on the Uu interface;
G-RNTI indication information used by the first terminal and/or the second terminal for broadcast scheduling on the Uu interface.
wherein the transmission path type includes: Uu link or sidelink link;
the specific object includes at least one of the following items:
   a destination Layer 2 Identity;
   a combination of a source Layer 2 Identity and a destination Layer 2 Identity;
   a combination of a source Layer 2 Identity, a destination Layer 2 Identity, and a cast type.

It should be noted that the network device provided in the embodiments of the present disclosure is capable of performing all the method steps described in the method embodiments and can achieve the same technical effects. Accordingly, details of parts identical to those in the method embodiments and the corresponding beneficial effects will not be repeated herein.

The embodiments of the present disclosure further provide a computer-readable storage medium. A computer program is stored on the computer-readable storage medium and, when executed by a processor, implements steps of an information transmission method applied to a network device. The processor-readable storage medium may be any available medium or data storage device accessible by the processor, including but not limited to magnetic storage (e.g., floppy disk, hard disk, magnetic tape, magneto-optical disk (MO), etc.), optical storage (e.g., CD, DVD, BD, HVD, etc.), and semiconductor memory (e.g., ROM, EPROM, EEPROM, non-volatile memory (NAND FLASH), solid-state drive (SSD), etc.).

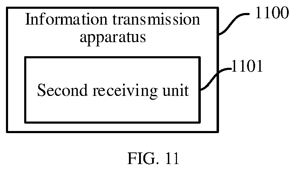

As shown in FIG. 11, an information transmission apparatus 1100 is provided according to an embodiment of the present disclosure. The apparatus is applied to a second terminal and comprises:
a second receiving unit 1101, configured to receive a first message sent by a network device or a first terminal, wherein the first message includes a mapping relationship between a first sidelink interface identifier and a first Uu interface identifier;
wherein the second terminal is a peer communication terminal of the first terminal via the sidelink interface.

Optionally, the first sidelink interface identification information includes one of the following items:
a destination Layer 2 Identity of the sidelink interface of the first terminal;
a combination of a destination Layer 2 Identity and a cast type of the sidelink interface of the first terminal;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal;
wherein the cast type includes at least one of: unicast, multicast, and broadcast.

Optionally, the first Uu interface identification information includes at least one of the following items:
an RNTI used by the first terminal on the Uu interface;
an RNTI used by the second terminal on the Uu interface;
identification information of a network device and/or cell serving the first terminal;
identification information of a network device and/or cell serving the second terminal;
for broadcast or multicast, a group RNTI (G-RNTI) used by the second terminal on the Uu interface;
for broadcast or multicast, identification information of a network device and/or cell from which the second terminal receives data via the G-RNTI.

Optionally, the apparatus further comprises:
a sixth sending unit, configured to send a third message to the network device, wherein the third message carries identification information of the second terminal.

Optionally, the identification information of the second terminal includes at least one of the following items:
a destination Layer 2 Identity of the sidelink interface corresponding to the second terminal;
a combination of a destination Layer 2 Identity and a cast type of the sidelink interface corresponding to the second terminal;
identification information of a second Uu interface corresponding to the second terminal.

Optionally, the apparatus further comprises:
a seventh sending unit, configured to send a fourth message to the first terminal, wherein the fourth message includes identification information of the second Uu interface corresponding to the second terminal.

Optionally, the identification information of the second Uu interface includes at least one of the following items:
an RNTI used by the second terminal on the Uu interface;
identification information of a network device and/or cell serving the second terminal;
for broadcast/multicast, a G-RNTI used by the second terminal on the Uu interface;
for broadcast/multicast, identification information of a network device and/or cell from which the second terminal receives data via the G-RNTI.

Optionally, the seventh sending unit is configured to:
send the fourth message to the first terminal upon a second condition being satisfied;
wherein the second condition includes at least one of the following items:
   the first terminal and/or the second terminal has established an RRC connection with the network device;
   the second terminal has discovered the first terminal via the sidelink interface;
   the second terminal has established a PC5-S connection or a PC5-RRC connection with the first terminal via the sidelink interface.

Optionally, the apparatus further comprises:
a sixth receiving unit, configured to receive a fifth message sent by the network device or the first terminal, wherein the fifth message carries transmission path indication information.

Optionally, the transmission path indication information includes one of the following items:
a transmission path type;
a transmission path type corresponding to a first bearer or a first logical channel.
a transmission path type corresponding to a specific object;
a transmission path type corresponding to a first bearer or a first logical channel for the specific object;
G-RNTI indication information used by the first terminal and/or the second terminal for multicast scheduling on the Uu interface;
G-RNTI indication information used by the first terminal and/or the second terminal for broadcast scheduling on the Uu interface;
wherein the transmission path type includes: Uu link or sidelink link;
the specific object includes at least one of the following:
   a destination Layer 2 Identity;
   a combination of a source Layer 2 Identity and a destination Layer 2 Identity;
   a combination of a source Layer 2 Identity, a destination Layer 2 Identity, and a cast type.

It should be noted that the apparatus embodiment corresponds one-to-one with the above method embodiments. All implementations in the above method embodiments are applicable to the apparatus embodiments and can achieve the same technical effect.

It should be noted that the division of units in the embodiments of the present disclosure is illustrative only and represents just one type of logical function partitioning. Other partitioning methods may be employed in actual implementation. Furthermore, the various functional units in the respective embodiments of the present disclosure may be integrated into one processing unit, may exist as separate physical units, or two or more units may be integrated into one unit. The above-mentioned integrated units can be implemented in hardware form or as software functional units.

If the integrated unit is implemented in the form of a software functional unit and is sold or used as an independent product, it may be stored in a processor-readable storage medium. Based on this understanding, the technical solutions of the present disclosure, in essence or at least in part, can be embodied in the form of a software product. This computer software product is stored in a storage medium and includes several instructions to enable a computer device (which may be a personal computer, server, or network device, etc.) or a processor to execute all or part of the steps of the methods described in the various embodiments of the present disclosure. The aforementioned storage medium includes: USB drives, mobile hard drives, Read-Only Memory (ROM), Random Access Memory (RAM), magnetic disks or optical discs, and other media capable of storing program code.

The present disclosure also provides a terminal, which is the second terminal. The structure of the second terminal is as shown in FIG. 8 and will not be repeated here.

wherein the processor is configured to read a computer program stored in the memory to perform the following operations:
receiving, via the transceiver, a first message sent by a network device or a first terminal, wherein the first message includes a mapping relationship between first sidelink interface identification information and first Uu interface identification information;
wherein the second terminal is a peer terminal of the first terminal via the sidelink interface.

Optionally, the first sidelink interface identification information includes one of the following items:
a destination Layer 2 Identity of the sidelink interface of the first terminal;
a combination of a destination Layer 2 Identity and a cast type of the sidelink interface of the first terminal;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal;
wherein the cast type includes at least one of: unicast, multicast, and broadcast.

Optionally, the first Uu interface identification information includes at least one of the following items:
an RNTI used by the first terminal on the Uu interface;
an RNTI used by the second terminal on the Uu interface;
identification information of a network device and/or cell serving the first terminal;
identification information of a network device and/or cell serving the second terminal;
for broadcast or multicast, a G-RNTI used by the second terminal on the Uu interface;
for broadcast or multicast, identification information of a network device and/or cell from which the second terminal receives data via the G-RNTI.

Optionally, the processor is further configured to read the computer program stored in the memory to perform the following operation:
sending, via the transceiver, a third message to the network device, wherein the third message carries identification information of the second terminal.

Optionally, the identification information of the second terminal includes at least one of the following items:
a destination Layer 2 Identity of the sidelink interface corresponding to the second terminal;
a combination of a destination Layer 2 Identity and a cast type of the sidelink interface corresponding to the second terminal;
identification information of the second Uu interface corresponding to the second terminal.

Optionally, the processor is further configured to execute the following operation by reading the computer program in the memory:
sending, via the transceiver, a fourth message to the first terminal, wherein the fourth message includes identification information of the second Uu interface corresponding to the second terminal.

Optionally, the identification information of the second Uu interface includes at least one of the following items:
an RNTI used by the second terminal on the Uu interface;
identification information of a network device and/or cell serving the second terminal;
for broadcast/multicast, a G-RNTI used by the second terminal on the Uu interface;
for broadcast/multicast, identification information of a network device and/or cell from which the second terminal receives the G-RNTI.

Optionally, the processor is further configured to execute the following operation by reading the computer program in the memory:
sending, via the transceiver, the fourth message to the first terminal upon satisfaction of a second condition;
wherein the second condition includes at least one of the following items:
   the first terminal and/or the second terminal has established an RRC connection with the network device;
   the second terminal has discovered the first terminal via the sidelink interface;
   the second terminal has established a sidelink link, PC5-S or PC5-RRC, with the first terminal via the sidelink interface.

Optionally, the processor is further configured to execute the following operation by reading the computer program in the memory:
receiving, via the transceiver, a fifth message sent by the network device or the first terminal, wherein the fifth message carries transmission path indication information.

Optionally, the transmission path indication information includes one of the following items:
a transmission path type;
a transmission path type corresponding to a first bearer or a first logical channel;
a transmission path type corresponding to a specific object;
a transmission path type corresponding to a first bearer or a first logical channel for the specific object;
G-RNTI indication information used by the first terminal and/or the second terminal for multicast scheduling on the Uu interface;
G-RNTI indication information used by the first terminal and/or the second terminal for broadcast scheduling on the Uu interface.

Wherein the transmission path type includes: Uu link or sidelink link;
the specific object includes at least one of the following items:
a destination Layer 2 Identity;
a combination of a source Layer 2 Identity and a destination Layer 2 Identity;
a combination of a source Layer 2 Identity, a destination Layer 2 Identity, and a cast type.

It should be noted that the above terminal provided in the embodiments of the present disclosure is capable of implementing all the method steps realized by the corresponding method embodiments and achieving the same technical effects. Details of parts identical to the method embodiments and their benefits will not be repeated here.

The embodiments of the present disclosure further provide a computer-readable storage medium storing a computer program. When executed by a processor, the computer program implements the steps of the information transmission method applied to the second terminal. The processor-readable storage medium may be any accessible medium or data storage device for the processor, including but not limited to magnetic storage (e.g., floppy disk, hard disk, magnetic tape, magneto-optical disk (MO)), optical storage (e.g., CD, DVD, BD, HVD), and semiconductor storage (e.g., ROM, EPROM, EEPROM, non-volatile memory (NAND FLASH), solid-state disk (SSD)), etc.

It should be understood by those skilled in the art that the embodiments of the present disclosure may be provided as methods, systems, or computer program products. Therefore, the present disclosure may be implemented in the form of fully hardware, fully software, or a combination of software and hardware. Moreover, the present disclosure may take the form of a computer program product embodied on one or more computer-usable storage media containing computer-usable program code, including but not limited to disk storage and optical storage.

The present disclosure is described with reference to flowcharts and/or block diagrams of methods, devices (systems), and computer program products according to embodiments of the present disclosure. It should be understood that each flow and/or block in the flowcharts and/or block diagrams can be implemented by computer-executable instructions. These computer-executable instructions can be supplied to a processor of a general-purpose computer, special-purpose computer, embedded processor, or other programmable data processing apparatus to produce a machine such that the instructions executed by the processor implement the functions specified in the flow or block.

These processor-executable instructions may also be stored in a processor-readable memory that can direct a computer or other programmable data processing device to function in a specific manner, such that the instructions stored in the processor-readable memory produce a manufactured article comprising instruction means that perform the functions specified in one or more flows of the flowchart and/or one or more blocks of the block diagram.

These processor-executable instructions may also be loaded onto a computer or other programmable data processing device to cause a series of operational steps to be performed on the computer or other programmable device, thereby producing computer-implemented processing. As a result, the instructions executed on the computer or other programmable device provide steps for implementing the functions specified in one or more flows of the flowchart and/or one or more blocks of the block diagram.

It should be noted that the division of the above modules should be understood as a logical functional division only, and in actual implementation, they may be entirely or partially integrated into a single physical entity, or physically separated. These modules may be implemented entirely in software by being invoked by a processing element; entirely in hardware; or partially by software invoked by a processing element and partially in hardware. For example, the determination module may be a separately established processing element, or it may be integrated into a chip of the above device. Additionally, it may be stored as program code in the memory of the above device and invoked and executed by a processing element of the above device to perform the function of the determination module. Other modules may be implemented similarly. Furthermore, all or some of these modules may be integrated or implemented independently. The processing element mentioned herein may be an integrated circuit with signal processing capabilities. In the implementation process, the steps of the above method or the above modules may be completed by hardware-integrated logic circuits or software-form instructions in the processing element.

For example, each module, unit, sub-unit, or sub-module may be one or more integrated circuits configured to implement the above methods, such as: one or more Application Specific Integrated Circuits (ASICs), or one or more digital signal processors (DSPs), or one or more Field Programmable Gate Arrays (FPGAs), etc. Furthermore, when any of the above modules is implemented in the form of program code invoked by a processing element, the processing element may be a general-purpose processor, such as a Central Processing Unit (CPU), or any processor capable of invoking program code. Moreover, these modules may be integrated together and implemented in the form of a System on a Chip (SoC).

The terms "first," "second," etc., as used in the specification and claims of the present disclosure, are intended to distinguish similar objects and are not necessarily indicative of any specific order or sequence. It should be understood that the terms may be interchanged under appropriate circumstances, so that the embodiments of the present disclosure described herein can be implemented in orders other than those illustrated or described. Additionally, the terms "comprising" and "having," and any variations thereof, are intended to be inclusive in a non-exclusive sense. For example, a process, method, system, product, or device comprising a series of steps or units is not necessarily limited to only those steps or units expressly listed, but may also include other steps or units not explicitly listed or those inherent to such processes, methods, products, or devices. Moreover, "and/or" used in the specification and claims shall indicate that one or more of the listed elements may be present. For example, "A and/or B and/or C" covers any one of A alone, B alone, C alone, A and B together, B and C together, A and C together, and A, B, and C all together. Similarly, the expression "at least one of A and B" should be understood as "A alone, B alone, or both A and B."

It will be apparent to those skilled in the art that various modifications and variations can be made to the present disclosure without departing from the spirit and scope of the disclosure. Accordingly, if such modifications and variations fall within the scope of the claims of the present disclosure and their equivalents, the present disclosure is intended to cover such modifications and variations.

## Claims

1. A method for information transmission, performed by a first terminal, comprising:
receiving a first message sent by a network device, wherein the first message comprises a mapping relationship between first sidelink interface identification information and first Uu interface identification information.

2. The method according to claim 1, wherein after receiving the first message sent by the network device, the method further comprises:
sending a second message to a second terminal via a sidelink interface, wherein the second message comprises the mapping relationship between the first sidelink interface identification information and the first Uu interface identification information;
wherein the second terminal is a peer terminal of the first terminal on the sidelink interface, and the number of the second terminals is greater than or equal to 1.

3. The method according to claim 1 or 2, wherein the first sidelink interface identification information comprises one of the following:
a destination Layer 2 Identity of the sidelink interface of the first terminal;
a combination of the destination Layer 2 Identity and a cast type of the sidelink interface of the first terminal;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal;
wherein the cast type comprises at least one of: unicast, multicast, and broadcast.

4. The method according to claim 1 or 2, wherein the first Uu interface identification information comprises at least one of the following:
an RNTI used by the first terminal on the Uu interface;
an RNTI used by the second terminal on the Uu interface;
identification information of a network device and/or cell serving the first terminal;
identification information of a network device and/or cell serving the second terminal;
a group RNTI used by the second terminal on the Uu interface for broadcast or multicast;
identification information of a network device and/or cell from which the second terminal receives data via the G-RNTI for broadcast or multicast.

5. The method according to claim 1, further comprising:
sending a third message to a network device, wherein the third message carries identification information of the second terminal.

6. The method according to claim 5, wherein the identification information of the second terminal comprises at least one of the following:
a destination Layer 2 Identity of the sidelink interface of the second terminal;
a combination of the destination Layer 2 Identity and a cast type of the sidelink interface of the second terminal;
identification information of a second Uu interface of the second terminal.

7. The method according to claim 5, wherein the third message further carries identification information of the first terminal.

8. The method according to claim 7, wherein the identification information of the first terminal is a source Layer 2 Identity of the sidelink interface of the first terminal.

9. The method according to claim 5, further comprising:
receiving a fourth message sent by the second terminal, wherein the fourth message comprises identification information of the second Uu interface of the second terminal.

10. The method according to claim 9, wherein the identification information of the second Uu interface comprises at least one of the following:
an RNTI used by the second terminal on the Uu interface;
identification information of a network device and/or cell serving the second terminal;
a G-RNTI used by the second terminal on the Uu interface for broadcast or multicast;
identification information of a network device and/or cell from which the second terminal receives data via the G-RNTI for broadcast or multicast.

11. The method according to claim 5, wherein the sending the third message to the network device comprises:
sending the third message to the network device upon satisfaction of a first condition;
wherein the first condition comprises at least one of the following:
the first terminal receives the fourth message from the second terminal;
the channel quality of the sidelink interface between the first terminal and the second terminal is less than or equal to a first threshold;
the channel quality of the sidelink interface between the first terminal and the second terminal is greater than or equal to a second threshold;
the channel quality of the Uu interface between the first terminal and the network device is less than or equal to a third threshold;
the channel quality of the Uu interface between the second terminal and the network device is less than or equal to a fourth threshold;
the channel quality of the Uu interface between the first terminal and the network device is greater than or equal to a fifth threshold;
the channel quality of the Uu interface between the second terminal and the network device is greater than or equal to a sixth threshold;
a change in the cast type of the first terminal occurs;
a change in the cast type of one or more logical channels of the first terminal occurs.

12. The method according to claim 1, further comprising:
receiving a fifth message sent by a network device, wherein the fifth message carries transmission path indication information.

13. The method according to claim 12, wherein the receiving the fifth message sent by the network device comprises:
receiving the fifth message sent by the network device via a first signaling;
wherein the first signaling comprises one of: radio resource control (RRC) signaling, medium access control control element (MAC CE), or physical layer signaling.

14. The method according to claim 12, further comprising:
sending a sixth message to a second terminal, wherein the sixth message carries the transmission path indication information.

15. The method according to claim 12 or 14, wherein the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel for a specific object;
G-RNTI indication information used by the first terminal and/or the second terminal for multicast scheduling on the Uu interface;
G-RNTI indication information used by the first terminal and/or the second terminal for broadcast scheduling on the Uu interface;
wherein the transmission path type comprises: a Uu link or a sidelink link;
wherein the specific object comprises at least one of the following:
a destination Layer 2 Identity;
a combination of a source Layer 2 Identity and a destination Layer 2 Identity;
a combination of a source Layer 2 Identity, a destination Layer 2 Identity, and a cast type.

16. A method for information transmission, performed by a network device, comprising:
sending a first message to a first terminal and/or a second terminal, wherein the first message comprises a mapping relationship between first sidelink interface identification information and first Uu interface identification information;
wherein the second terminal is a peer terminal of the first terminal on the sidelink interface.

17. The method according to claim 16, wherein the first sidelink interface identification information comprises one of the following:
a destination Layer 2 Identity of the sidelink interface of the first terminal;
a combination of the destination Layer 2 Identity and a cast type of the sidelink interface of the first terminal;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal;
wherein the cast type comprises at least one of: unicast, multicast, and broadcast.

18. The method according to claim 16, wherein the first Uu interface identification information comprises at least one of the following:
an RNTI used by the first terminal on the Uu interface;
an RNTI used by the second terminal on the Uu interface;
identification information of a network device and/or cell serving the first terminal;
identification information of a network device and/or cell serving the second terminal;
a group RNTI used by the second terminal on the Uu interface for broadcast or multicast;
identification information of a network device and/or cell from which the second terminal receives data via the G-RNTI for broadcast or multicast.

19. The method according to claim 16, further comprising:
receiving a third message sent by the first terminal and/or the second terminal, wherein the third message carries identification information of the second terminal.

20. The method according to claim 19, wherein the identification information of the second terminal comprises at least one of the following:
a destination Layer 2 Identity of the sidelink interface of the second terminal;
a combination of the destination Layer 2 Identity and a cast type of the sidelink interface of the second terminal;
identification information of a second Uu interface of the second terminal.

21. The method according to claim 19, wherein the third message further carries identification information of the first terminal.

22. The method according to claim 21, wherein the identification information of the first terminal is a source Layer 2 Identity of the sidelink interface corresponding to the first terminal.

23. The method according to claim 16, wherein after sending the first message to the first terminal and/or the second terminal, the method further comprises:
sending a fifth message to the first terminal and/or the second terminal, wherein the fifth message carries transmission path indication information.

24. The method according to claim 23, wherein the sending the fifth message to the first terminal and/or the second terminal comprises:
sending the fifth message to the first terminal and/or the second terminal via a first signaling;
wherein the first signaling comprises one of the following: radio resource control (RRC) signaling, medium access control control element (MAC CE), or physical layer signaling.

25. The method according to claim 23, wherein the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel for a specific object;
G-RNTI indication information used by the first terminal and/or the second terminal for multicast scheduling on the Uu interface;
G-RNTI indication information used by the first terminal and/or the second terminal for broadcast scheduling on the Uu interface;
wherein the transmission path type comprises: a Uu link or a sidelink link;
wherein the specific object comprises at least one of the following:
a destination Layer 2 Identity;
a combination of a source Layer 2 Identity and a destination Layer 2 Identity;
a combination of a source Layer 2 Identity, a destination Layer 2 Identity, and a cast type.

26. A method for information transmission, performed by a second terminal, comprising:
receiving a first message sent by a network device or a first terminal, wherein the first message comprises a mapping relationship between first sidelink interface identification information and first Uu interface identification information;
wherein the second terminal is a peer terminal of the first terminal on the sidelink interface.

27. The method according to claim 26, wherein the first sidelink interface identification information comprises one of the following:
a destination Layer 2 Identity of the sidelink interface of the first terminal;
a combination of the destination Layer 2 Identity and a cast type of the sidelink interface of the first terminal;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal;
wherein the cast type comprises at least one of: unicast, multicast, and broadcast.

28. The method according to claim 26, wherein the first Uu interface identification information comprises at least one of the following:
an RNTI used by the first terminal on the Uu interface;
an RNTI used by the second terminal on the Uu interface;
identification information of a network device and/or cell serving the first terminal;
identification information of a network device and/or cell serving the second terminal;
a group RNTI used by the second terminal on the Uu interface for broadcast or multicast;
identification information of a network device and/or cell from which the second terminal receives data via the G-RNTI for broadcast or multicast.

29. The method according to claim 26, further comprising:
sending a third message to a network device, wherein the third message carries identification information of the second terminal.

30. The method according to claim 29, wherein the identification information of the second terminal comprises at least one of the following:
a destination Layer 2 Identity of the sidelink interface of the second terminal;
a combination of the destination Layer 2 Identity and a cast type of the sidelink interface of the second terminal;
identification information of a second Uu interface of the second terminal.

31. The method according to claim 26, further comprising:
sending a fourth message to the first terminal, wherein the fourth message comprises identification information of the second Uu interface corresponding to the second terminal.

32. The method according to claim 31, wherein the identification information of the second Uu interface comprises at least one of the following:
an RNTI used by the second terminal on the Uu interface;
identification information of a network device and/or cell serving the second terminal;
a group RNTI used by the second terminal on the Uu interface for broadcast or multicast;
identification information of a network device and/or cell from which the second terminal receives data via the G-RNTI for broadcast or multicast.

33. The method according to claim 31, wherein the sending the fourth message to the first terminal comprises:
sending the fourth message to the first terminal under a second condition;
wherein the second condition comprises at least one of the following:
the first terminal and/or the second terminal has established a radio resource control (RRC) connection with a network device;
the second terminal has discovered the first terminal via the sidelink interface;
the second terminal has established a PC5-S connection or a PC5-RRC connection with the first terminal via the sidelink interface.

34. The method according to claim 26, further comprising:
receiving a fifth message sent by a network device or the first terminal, wherein the fifth message carries transmission path indication information.

35. The method according to claim 34, wherein the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel for a specific object;
G-RNTI indication information used by the first terminal and/or the second terminal for multicast scheduling on the Uu interface;
G-RNTI indication information used by the first terminal and/or the second terminal for broadcast scheduling on the Uu interface;
wherein the transmission path type comprises: a Uu link or a sidelink link;
wherein the specific object comprises at least one of the following:
a destination Layer 2 Identity;
a combination of a source Layer 2 Identity and a destination Layer 2 Identity;
a combination of a source Layer 2 Identity, a destination Layer 2 Identity, and a cast type.

36. A terminal, being a first terminal, comprising a memory, a transceiver, and a processor:
the memory is configured to store a computer program;
the transceiver is configured to transmit and receive data under control of the processor;
the processor is configured to read the computer program from the memory and perform the following operation:
receiving a first message sent by a network device, wherein the first message comprises a mapping relationship between first sidelink interface identification information and first Uu interface identification information.

37. The terminal according to claim 36, wherein the processor is further configured to read the computer program from the memory and perform the following operation:
sending a second message to a second terminal via the sidelink interface, wherein the second message comprises the mapping relationship between the first sidelink interface identification information and the first Uu interface identification information,
wherein the second terminal is a peer terminal of the first terminal on the sidelink interface and a number of the second terminals is greater than or equal to one.

38. The terminal according to claim 36 or 37, wherein the first sidelink interface identification information comprises one of the following:
a destination Layer 2 Identity of the sidelink interface of the first terminal;
a combination of the destination Layer 2 Identity and a cast type of the sidelink interface of the first terminal;
a combination of a source Layer 2 Identity and a destination Layer 2 Identity of the sidelink interface of the first terminal;
a combination of a source Layer 2 Identity, a destination Layer 2 Identity, and a cast type of the sidelink interface of the first terminal;
a combination of a source Layer 2 Identity, a destination Layer 2 Identity, and a logical channel identity of the sidelink interface of the first terminal;
a combination of a source Layer 2 Identity, a destination Layer 2 Identity, a cast type, and a logical channel identity of the sidelink interface of the first terminal;
wherein the cast type comprises at least one of: unicast, multicast, and broadcast.

39. The terminal according to claim 36 or 37, wherein the first Uu interface identification information comprises at least one of the following:
an RNTI used by the first terminal on the Uu interface;
an RNTI used by the second terminal on the Uu interface;
identification information of a network device and/or cell serving the first terminal;
identification information of a network device and/or cell serving the second terminal;
a group RNTI used by the second terminal on the Uu interface for broadcast or multicast;
identification information of a network device and/or cell from which the second terminal receives data via the G-RNTI for broadcast or multicast.

40. The terminal according to claim 36, wherein the processor is further configured to read the computer program from the memory and perform the following operation:
sending a third message to a network device, wherein the third message carries identification information of the second terminal.

41. The terminal according to claim 40, wherein the identification information of the second terminal comprises at least one of the following:
a destination Layer 2 Identity of the sidelink interface of the second terminal;
a combination of the destination Layer 2 Identity and a cast type of the sidelink interface of the second terminal;
identification information of the second Uu interface of the second terminal.

42. The terminal according to claim 40, wherein the third message further carries identification information of the first terminal.

43. The terminal according to claim 42, wherein the identification information of the first terminal is a source Layer 2 Identity of the sidelink interface corresponding to the first terminal.

44. The terminal according to claim 40, wherein the processor is further configured to read the computer program from the memory and perform the following operation:
receiving a fourth message sent by the second terminal, wherein the fourth message comprises identification information of a second Uu interface corresponding to the second terminal.

45. The terminal according to claim 44, wherein the identification information of the second Uu interface comprises at least one of the following:
an RNTI used by the second terminal on the Uu interface;
identification information of a network device and/or cell serving the second terminal;
a group RNTI used by the second terminal on the Uu interface for broadcast/multicast;
identification information of a network device and/or cell from which the second terminal receives data via the G-RNTI for broadcast/multicast.

46. The terminal according to claim 40, wherein the processor is configured to read the computer program from the memory and perform the following operation:
sending the third message to the network device under a first condition;
wherein the first condition comprises at least one of the following:
the first terminal receives the fourth message from the second terminal;
channel quality of the sidelink interface between the first terminal and the second terminal is less than or equal to a first threshold;
channel quality of the sidelink interface between the first terminal and the second terminal is greater than or equal to a second threshold;
channel quality of the Uu interface between the first terminal and the network device is less than or equal to a third threshold;
channel quality of the Uu interface between the second terminal and the network device is less than or equal to a fourth threshold;
channel quality of the Uu interface between the first terminal and the network device is greater than or equal to a fifth threshold;
channel quality of the Uu interface between the second terminal and the network device is greater than or equal to a sixth threshold;
a cast type of the first terminal changes;
a cast type of one or more logical channels of the first terminal changes.

47. The terminal according to claim 36, wherein the processor is further configured to read the computer program from the memory and perform the following operation:
receiving a fifth message sent by the network device, wherein the fifth message carries transmission path indication information.

48. The terminal according to claim 47, wherein the processor is configured to read the computer program from the memory and perform the following operation:
receiving the fifth message sent by the network device via first signaling;
wherein the first signaling comprises one of: radio resource control (RRC) signaling, medium access control control element (MAC CE), physical layer signaling.

49. The terminal according to claim 47, wherein the processor is further configured to read the computer program from the memory and perform the following operation:
sending a sixth message to the second terminal, wherein the sixth message carries the transmission path indication information.

50. The terminal according to claim 47 or 49, wherein the transmission path indication information comprises one of the following:
a transmission path type;
a transmission path type corresponding to a first bearer or a first logical channel;
a transmission path type corresponding to a specific object;
a transmission path type corresponding to a first bearer or a first logical channel for a specific object;
G-RNTI indication information used by the first terminal and/or the second terminal for multicast scheduling on the Uu interface;
G-RNTI indication information used by the first terminal and/or the second terminal for broadcast scheduling on the Uu interface;
wherein the transmission path type comprises: a Uu link or a sidelink link;
wherein the specific object comprises at least one of the following:
a destination Layer 2 Identity;
a combination of a source Layer 2 Identity and a destination Layer 2 Identity;
a combination of a source Layer 2 Identity, a destination Layer 2 Identity, and a cast type.

51. A network device, comprising a memory, a transceiver, and a processor:
the memory is configured to store a computer program;
the transceiver is configured to transmit and receive data under the control of the processor;
the processor is configured to read the computer program from the memory and perform the following operation:
sending a first message to a first terminal and/or a second terminal, wherein the first message comprises a mapping relationship between first sidelink interface identification information and first Uu interface identification information;
wherein the second terminal is a peer terminal of the first terminal on the sidelink interface.

52. A terminal, being a second terminal, comprising a memory, a transceiver, and a processor:
the memory is configured to store a computer program;
the transceiver is configured to transmit and receive data under the control of the processor;
the processor is configured to read the computer program from the memory and perform the following operation:
receiving a first message sent by a network device or a first terminal, wherein the first message comprises a mapping relationship between first sidelink interface identification information and first Uu interface identification information;
wherein the second terminal is a peer terminal of the first terminal on the sidelink interface.

53. An information transmission device, applied to a first terminal, comprising:
a first receiving unit, configured to receive a first message sent by a network device, wherein the first message comprises a mapping relationship between first sidelink interface identification information and first Uu interface identification information.

54. An information transmission device, applied to a network device, comprising:
a first transmitting unit, configured to send a first message to a first terminal and/or a second terminal, wherein the first message comprises a mapping relationship between first sidelink interface identification information and first Uu interface identification information;
wherein the second terminal is a peer terminal of the first terminal on the sidelink interface.

55. An information transmission device, applied to a second terminal, comprising:
a second receiving unit, configured to receive a first message sent by a network device or a first terminal, wherein the first message comprises a mapping relationship between first sidelink interface identification information and first Uu interface identification information;
wherein the second terminal is a peer terminal of the first terminal on the sidelink interface.

56. A processor-readable storage medium, wherein the processor-readable storage medium stores a computer program, and the computer program is configured to cause the processor to execute the method according to any one of claims 1 to 35.
